# EUROPEAN PATENT APPLICATION

(11) **EP 1 178 421 A2**
(43) Date of publication of application: **06.02.2002**
(21) Application number: 01118381.1
(22) Date of filing: 27.07.2001
(51) Int. Cl.: G06F 17/60

(54) **Electronic coupon system**

(30) Priority: 01.08.2000 JP 2000233511; 06.04.2001 JP 2001107934
(71) Applicant: Hitachi Maxell Ltd., Osaka, 567 (JP)
(72) Inventor: Kitaura, Keiko, Tokyo (JP); Fujita, Ichirou, Tokyo (JP); Yamato, Yorichika, Tokyo (JP); Suzuki, Chika, Kawasaki-shi, Kanagawa (JP)
(74) Representative: Betten & Resch

(57) **Abstract**

An easy to use, secure electronic coupon system provides electronic coupons to users having a cellular phone 5 with a display device. A coupon data storage device 23 stores information relating to the electronic coupons. A bar code processor 14 generates bar code data based at least on the electronic coupon data stored in the coupon data storage device 23. A bar code processor 14 sends the bar code data generated by the bar code processor 14 to the cellular phone 5. Using the cellular phone 5, electronic coupons can thus be presented in a store where a product or service is purchased, and the electronic coupons can be scanned by an existing bar code scanner connected to a POS system.

## Description

### TECHNICAL FIELD OF THE INVENTION

The present invention relates in general to technology for providing electronic coupons, more particularly to an electronic coupon system for providing electronic coupons to mobile communication devices of users.

### BACKGROUND OF THE INVENTION

Using coupons offering a discount for offered services or goods is a common business practice. Such coupons are typically printed on paper, and show the name of the product(s) the coupon can be used for as well as the discount value or discount rate. Retail customers using such coupons present the product coupon to a sales clerk at the time the product is purchased, and are then able to purchase the product for the discounted amount.

Recent advances in data communications have led to the development of systems enabling a specific discount service to be used using a cellular phone. This system displays the content of the discount service transmitted from the discount service provider on the screen of the cellular phone. The user shows the screen with the displayed content to the sales clerk to receive the discount.

Problems occurring with the conventional method of using coupons in business transactions are described next below.

When paper coupons are used, the seller, typically a retail store, must collect and tabulate all coupons received from the customer, report the coupon total to the product manufacturer and bill for the total discounted amount of the coupons. This method is obviously lacking in responsiveness (speed) and is labor intensive.

Electronic coupons, on the other hand, lack in security, that is, the ability to demonstrate the authenticity of the coupon. It is therefore difficult for the seller to determine whether the discount content presented by the consumer is authentic. It is also not possible to determine how and who used the discount.

### SUMMARY OF THE INVENTION

An object of the present invention is therefore to provide an easy to use, safe electronic coupon system.

A further object of this invention is to provide an electronic coupon system that can effectively utilize information gathered in conjunction with the use of electronic coupons.

A yet further object of this invention is to provide technology enabling a discount amount received in conjunction with using an electronic coupon when a particular product or service is purchased to be used to receive a discount on some other product or service.

To achieve the above objects, an electronic coupon system, which is a first aspect of this invention, for providing electronic coupons to a user having a mobile communication device (such as user cellular phone 5 in the preferred embodiments) with a display device has: an electronic coupon information storage device (such as coupon data storage 23 in the preferred embodiments) for storing information relating to the electronic coupons; a bar code generator (such as bar code processor 14 in the preferred embodiments) for generating bar code information based at least on the electronic coupon information stored in the electronic coupon information storage device; and a bar code information transmitter (such as bar code processor 14 in the preferred embodiments) for transmitting to the mobile communication device bar code information generated by the bar code generator.

This configuration enables electronic coupons to be presented in a store using the mobile communication device, and enables the electronic coupon to be scanned by the existing bar code system.

This electronic coupon system may have an electronic coupon register (such as coupon processor 13 in the preferred embodiments) for registering electronic coupon information in the electronic coupon system in accordance with a request from a product or service provider (such as a manufacturer). This electronic coupon information may include identification information of the products or services for which an electronic coupon is valid; information concerning the discount the coupon provides; stores where the coupon can be used; and coupon expiration information.

Yet further, the bar code generator may generate bar code information using information relating to the electronic coupon (such as identification information of the products or services for which the electronic coupon is valid, discount amount, and identification information of stores where the coupon can be used) and user identification information (such as the user member number or serial number corresponding to the member number in the preferred embodiments). This enables to obtain information about the users that use an electronic coupon to purchase a product or service.

Yet further, the bar code generator may generate bar code information using at least information relating to a combination of products or services for which an electronic coupon is valid. Yet further, user identification information may also be used to generate the bar code information. Significant time and effort are required when paying the price if the bar code information corresponding to the electronic coupon is issued for each of products or services and the store scans the bar code information. Therefore, when plural products or services are purchased, for which the electronic coupons are valid, information relating to the combination of the products or services (such as the total discount) and user identification information (such as a serial number corresponding to a member number) are used to generate the bar code information, for example. This also can reduce the number of digits used in the bar code as well as the number of scanning.

In addition, the bar code information generated by the bar code generator may include image data for displaying a bar code on the display device of the mobile communication device. The bar code image information may be generated by the mobile communication device, but by sending the bar code image data to the mobile communication device, the mobile communication device can display the bar code on the display device without further special processing.

The bar code generator may further store in an issued bar code information storage device (such as bar code information database 183 in the preferred embodiments) user member identification information (such as a member number), identification information (such as a JAN (Japan Article Number) code) of a product or service selected by the user, for which the electronic coupon is valid, and information (such as the generated bar code information) relating to at least a combination of user-selected products or services for which the electronic coupons are valid. In addition to this information, the discount amount or discount unit, identification information of stores where the coupon can be used, and the time issued or the expiration information may also be stored in the issued bar code information storage device. This enables the discount amount to be returned to the user at some later time by various methods rather than at the store where the product or service is purchased.

In addition, the electronic coupon system of the first aspect of this invention may further has an electronic coupon information search means (such as coupon processor 13 in the preferred embodiments) for searching electronic coupon information from the electronic coupon information storage device according to an instruction from a user, and outputting the search result to the mobile communication device of the user. This enables a user to obtain bar code information for the desired electronic coupons. The user can select one or a plurality of products or services.

Further, this electronic coupon system of the first aspect of this invention may have a receiver (such as bar code processor 14 in the preferred embodiments) for receiving bar code information scanned by a bar code scanner (such as bar code system 6) installed in a store and transmitted from a computer for the store. This bar code information may be transmitted from the bar code information transmitter to the user's mobile communication device and displayed on the display device of the user's mobile communication device in the store. This enables bar codes used in a store to be confirmed and checked.

Further, this electronic coupon system of the first aspect of this invention may have a receiver for receiving bar code information and purchased product or service identification information (such as a JAN code) from a computer for a store in which a bar code scanner, which has scanned the bar code information, is installed. The bar code information may be transmitted from the bar code information transmitter to the user's mobile communication device and scanned from the display device thereof by the bar code scanner. The product or service identification information, such as a JAN code, may include all or only part of the JAN codes included in a single sales slip generated by the POS (point of sales) system. Whether the product or service subject to the electronic coupon, which was selected when the bar code information was generated, was actually purchased or not can thus be determined, and the discount due to the user can thus be confirmed.

Further, this electronic coupon system of the first aspect of this invention has a receiver for receiving bar code information and purchased product or service identification and quantity information from a computer for a store in which a bar code scanner, which has scanned the bar code information, is installed. The bar code information may be transmitted from the bar code information transmitter to the user's mobile communication device and scanned from the display device thereof by the bar code scanner. The electronic coupons can be registered so that a user can use a particular coupon only once, or can use a coupon multiple times. In the latter case the refund due to the user for the discount is determined by the quantity purchased. It may also be necessary to confirm whether the quantity purchased is the same as the quantity specified when the bar code information was generated.

Further, this electronic coupon system of the first aspect of this invention may have a receiver for receiving bar code information and a request for identification information for products or services for which the electronic coupon is valid from a computer for a store in which a bar code scanner, which has scanned the bar code information, is installed; and a sender for sending identification information for products or services for which the electronic coupon is valid to the computer for the store in response to the identification information request from the computer for the store. The bar code information may be transmitted from the bar code information transmitter to the user's mobile communication device and scanned from the display device thereof by the bar code scanner. Only data relating to the generated bar code information may be extracted from a sales slip issued by the POS system.

Yet further, this electronic coupon system may have means for receiving from the computer for the store identification and quantity information for a purchased product or service corresponding to the bar code information; and means for storing in a storage device the bar code information and the identification and quantity information for the purchased product or service corresponding to the bar code information.

Yet further, this electronic coupon system of the first aspect of this invention may have a bar code comparator (such as bar code processor 14 in the preferred embodiments) for comparing first bar code information received from the receiver and second bar code information generated by the bar code generator and outputting the comparison result. This makes it possible to ensure that a bar code used to make a purchase is not used improperly.

Yet further, when the first bar code information and second bar code information are the same, the bar code comparator may additionally compare time stamp information of the first bar code information with time stamp information of the second bar code information. This enables usage of electronic coupons not used within a specified period to be restricted.

Yet further, this electronic coupon system of the first aspect of this invention may have a user information storage device (such as user data storage 21 in the preferred embodiments) for storing user attribute information in connection with user identification information, and a data collection processor (such as data collection processor 17 in the preferred embodiments). The data collection processor may determine a relationship between user attribute information and products or services for which the electronic coupon is valid by extracting user identification information and identification information for products or services for which the electronic coupon is valid from the bar code information received from the receiver and extracting user attribute information from the user information storage device using the user identification information. This makes it possible to output relationship information between products or services and user attribute information.

Yet further, this electronic coupon system of the first aspect of this invention may have a data collection processor (such as data collection processor 17 in the preferred embodiments) for extracting from the bar code information received from the receiver and storing into a usage information storage device identification information of users and identification information for products or services for which the electronic coupon is valid. The data collection processor may extract identification information of users that have purchased particular products or services based on information stored in the usage information storage device, and sends a survey request to the users based on the extracted identification information of users. This enables user surveys and/or advertisements by the direct mail to be conducted more efficiently because surveys and/or direct mail can be sent to only users that have purchased particular products or services.

Yet further, this electronic coupon system of the first aspect of this invention may have means for determining at least either whether or not the bar code information received from the computer for the store by the receiver is bar code information issued for that store or whether or not the bar code information received from the computer for the store by the receiver was used before the expiration. This enables electronic coupons to be restricted for use at particular stores, and enables control of the period for which electronic coupons can be used.

Yet further, this electronic coupon system of the first aspect of this invention may have second means for determining if the purchased product or service corresponding to the bar code information is included in the products or services for which the electronic coupons are valid and which are extracted by using the bar code information. If the electronic coupon represents a combination of plural products or services, this enables a discount to be provided for those products or services selected when the bar code information for the electronic coupons was generated.

Yet further, this electronic coupon system may have means for storing into a storage device a discount amount for a purchased product or service determined by the second means for determining to be included in the products or services for which the electronic coupons are valid and which are extracted by using the bar code information. This enables an amount determined by the provided discount to be refunded to the user at some later time by some other method rather than at the time of purchase. If the purchased quantity differs from the quantity specified for the selected products or services when the bar code information of the electronic coupon was generated, the refund amount can be stored for the actual quantity purchased.

Yet further, this electronic coupon system may have means for notifying a carrier of the mobile communication device of the discount amount accumulated during a predetermined period for each user. The discount amount accumulated during a predetermined period may be stored in a storage device. This enables the discount to be refunded to a user to be credited against cellular phone (include PHS devices) communication charges, for example.

Yet further, this electronic coupon system may have means (such as settlement processor 15 in the preferred embodiments) for determining a discount amount based on identification information of the products or services for which the electronic coupons are valid and which are extracted by using the bar code information received by the receiver, and billing a provider of the products or services for which the electronic coupons are valid for an amount at least equal to the discount amount. This enables the provider of the products or services for which the electronic coupons are valid to be billed for the discount plus a service charge, for example. The discount (minus the service charge if the service charge is also received by the store) is returned to the store, and the service charge is retained as income by the provider of this electronic coupon service (called as "electronic coupon provider" below).

An electronic coupon providing method, which is a second aspect of the present invention, for providing an electronic coupon to a user having a mobile communication device with a display device includes steps of: storing information relating to the electronic coupons to an electronic coupon information storage device; generating bar code information based at least on the information relating to the electronic coupon stored in the electronic coupon information storage device; and transmitting to the mobile communication device bar code information generated in the step of generating bar code information.

The variations for the first aspect of this invention described above can also be applied to the second aspect of this invention.

The electronic coupon system of this invention can also be implemented using a combination of computers and a program embodying the above-described electronic coupon providing method. This program can be stored into storage medium or storage device such as floppy disk, CD-ROM, magneto-optical disk, semiconductor memory, hard disk, and etc. The program may also be distributed over a network. Furthermore, data used during the described processes is stored temporarily in computer memory.

Other objects and attainments together with a fuller understanding of the invention will become apparent and appreciated by referring to the following description and claims taken in conjunction with the accompanying drawings.

### BRIEF DESCRIPTION OF THE DRAWINGS

Fig. 1 shows an outline of an electronic coupon system in a first preferred embodiment of the present invention;
Fig. 2 is a flow chart representing a processing flow performed by the electronic coupon system in the first preferred embodiment of the present invention;
Fig. 3 shows a user registration screen presented on the display of a user terminal in the electronic coupon system in the first preferred embodiment of the present invention;
Fig. 4 shows a search screen presented on the display of a cellular phone in the electronic coupon system in the first preferred embodiment of the present invention;
Fig. 5 shows a search screen presented on the display of the cellular phone in the electronic coupon system in the first preferred embodiment of the present invention;
Fig. 6 is a flow chart representing a processing flow performed by the electronic coupon system in the first preferred embodiment of the present invention;
Fig. 7 shows the screen of the cellular phone in the electronic coupon system in the first preferred embodiment of the present invention;
Fig. 8 shows the screen of the cellular phone in the electronic coupon system in the first preferred embodiment of the present invention;
Fig. 9 is a flow chart representing a processing flow performed by the electronic coupon system in the first preferred embodiment of the present invention;
Fig. 10 is a flow chart representing a processing flow performed by the electronic coupon system in the first preferred embodiment of the present invention;
Fig. 11 is a flow chart representing a processing flow performed by the electronic coupon system in the first preferred embodiment of the present invention;
Fig. 12 shows an outline of an electronic coupon system in a second preferred embodiment of the present invention;
Fig. 13 is a flow chart of a business flow in the second preferred embodiment of the present invention;
Fig. 14 is a flow chart of a member registration process in the second preferred embodiment of the present invention;
Fig. 15 is a flow chart of an electronic coupon information registration process in the second preferred embodiment of the present invention;
Fig. 16 shows an example of an electronic coupon information registration screen in the second preferred embodiment of the present invention;
Fig. 17 is a flow chart of the steps from searching to generating an electronic coupon in the second preferred embodiment of the present invention;
Fig. 18 shows a main menu screen for an electronic coupon search in the second preferred embodiment of the present invention;
Fig. 19 shows a first part of the screen flow during an electronic coupon search in the second preferred embodiment of the present invention;
Fig. 20 shows a second part of the screen flow during the electronic coupon search in the second preferred embodiment of the present invention;
Fig. 21 shows a third part of the screen flow during the electronic coupon search in the second preferred embodiment of the present invention;
Fig. 22 shows an example of a bar code information display on the cellular phone in the second preferred embodiment of the present invention;
Fig. 23 is a flow chart of a bar code information generating process in the second preferred embodiment of the present invention;
Fig. 24 shows an example data stored in a bar code information database in the second preferred embodiment of the present invention;
Fig. 25 is a flow chart of bar code information scanning and sales slip data transmission process in the second preferred embodiment of the present invention;
Fig. 26 shows an example of a receipt generated in the second preferred embodiment of the present invention;
Fig. 27 is a flow chart of the second sales slip data transmission process in the second preferred embodiment of the present invention;
Fig. 28 is a flow chart of a discount process in the second preferred embodiment of the present invention;
Fig. 29 is a flow chart of usage information analysis, data collection, billing and payment processing in the second preferred embodiment of the present invention; and
Fig. 30 shows a display example of a usage statement in the second preferred embodiment of the present invention.

### DETAIL DESCRIPTION OF THE PREFERRED EMBODIMENTS

The preferred embodiments of the present invention are described below with reference to the accompanying figures.

### A. Embodiment 1

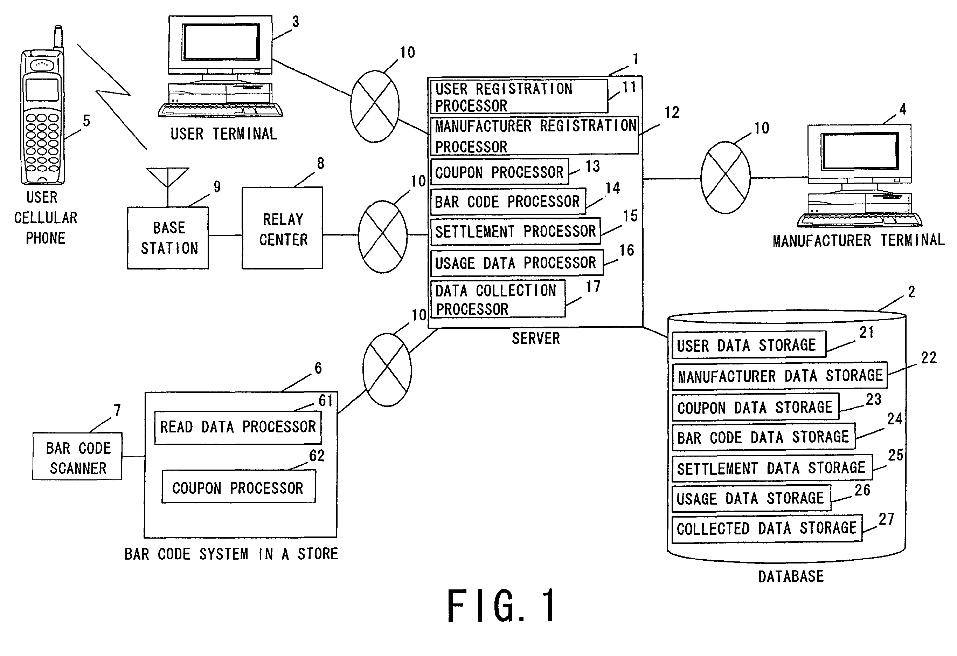

Fig. 1 shows the configuration of an electronic coupon system according to the first preferred embodiment of the present invention. Referring to Fig. 1, a server 1 is a server managed and maintained by the coupon service provider. A database 2 is connected to the server 1, and reads and writes data to storage according to instructions from the server 1.

A user terminal 3 is typically a personal computer with a monitor. A web browser for presenting information received from the server 1 via a communication network on the user's display is installed to the user terminal 3. The user terminal 3 also has input means such as a keyboard and mouse and a communication function so that the user terminal 3 can communicate with the server 1 over the communication network.

A manufacturer terminal 4 is similar to the user terminal 3 and has a display, web browser, communication function, and input means. It should be noted that "manufacturer" as used herein is not limited to the manufacturing companies that produce goods for sale, and includes other providers of goods or services, particularly including resellers that purchase goods from other manufacturers for resale and marketing.

The user's cellular phone 5 has an image display means for receiving and displaying image data. This image display means commonly has an LCD panel and image processing circuit. The cellular phone 5 communicates wirelessly with a base station 9, and connects to the communication network 10 through a relay center 8 connected to the base station 9. Note that this communication network 10 can be any communication network, including public network and the Internet.

A bar code system 6 is installed in the business establishment providing the product or service. Note that "business establishment" as used herein is not limited simply to stores that sell goods, and includes restaurants, movie theaters, and any other business providing goods or services. Note that these are collectively referred to herein as a store.

The bar code system 6 is normally provided as part of the point-of-sale (POS) system, a system for managing product sales information. The bar code system 6 is connected to a bar code scanner 7, has means for processing the bar code data scanned by the bar code scanner 7, and is commonly implemented with a computer. The bar code system 6 typically also has a POS-compatible cash register for collecting data at the point of sale, and many such registers are now based on a personal computer.

While a common bar code system reads particularly product registration codes, this embodiment of the invention modifies the program to also read code data for the electronic coupon system. Note that this electronic coupon system code data has a different meaning from the product registration codes. Note, further, that except for special circumstances this requires no modification of the hardware configuration, but the hardware must have a communication function for transmitting data to at least the server 1.

A bar code as used in such applications typically refers to a linear bar code containing numerous black lines with the thickness and spacing of the black lines adjusted according to the encoded content. Such bar codes are widely used as POS codes on clothing, food, and other household goods, and can include such information as the country of origin (manufacture), industry or type, product name, and price. Furthermore, a wide range of bar codes is currently in use, including nationally standardized bar codes and application-specific bar codes used only inside a particular company. One of the most widely used bar codes in Japan is the JAN bar code defined under the Japan Industrial Standards (JIS). The JAN-UPC (universal product code) normally contains from 8 to 13 digits with the last digit being a parity code, resulting in 7 to 12 digits for data encoding.

The bar code system 6 also has a read data processor 61 and a coupon processor 62. The read data processor 61 processes the data captured by the bar code scanner 7. The coupon processor 62 has a function for calculating the amounts to bill the user and the manufacturer based on the scanned data supplied by the read data processor 61, and a function for transmitting coupon-related information and user identification information contained in the bar code data.

The server 1 has a user registration processor 11, manufacturer registration processor 12, coupon processor 13, bar code processor 14, settlement processor 15, usage data processor 16, and data collection processor 17. The database 2 has user data storage 21, manufacturer data storage 22, coupon data storage 23, bar code data storage 24, settlement data storage 25, usage data storage 26, and collected data storage 27.

The user registration processor 11 processes user registrations for users wanting to access and use the services provided by the electronic coupon system according to this preferred embodiment of the present invention. Information about each registered user is then stored into the user data storage 21 in the database 2.

The manufacturer registration processor 12 similarly processes manufacturer registrations for manufacturers wanting to issue electronic coupons using the electronic coupon system according to this preferred embodiment of the present invention. Information about each registered manufacturer is similarly stored into the manufacturer data storage 22 in the database 2.

The coupon processor 13 processes information about the electronic coupons issued based on settings by a manufacturer registered by the manufacturer registration processor 12. More specifically, the coupon processor 13 stores the coupon data sent from the manufacturer terminal 4 via communication network 10 into the coupon data storage 23. This coupon data typically includes, for example, the product name and the discount rate or discounted amount. The coupon processor 13 also searches the coupon data storage 23 for coupons meeting the search criteria received from a user cellular phone 5 via the communication network 10, and then extracts the information relating to the desired coupon.

In response to bar code generation requests sent from a user cellular phone 5, the bar code processor 14 generates bar code data based on the user identification information and coupon information. The generated bar code data is then sent to the user cellular phone 5 via communication network 10, relay center 8, and base station 9, and is also stored to the bar code data storage 24 in database 2. In this embodiment of the present invention, the bar code processor 14 also has a function for compressing a data sequence of approximately 20 digits to a code of 8 digits or 13 digits. This compression process can be achieved using technology comparable to that used for G code compression. Note that a G code is the numerical code sequence shown in the television schedules published in newspapers and magazines to simplify programming a VCR to record a program. In this application the G code encodes the recording (broadcast) date and channel, and the start and end time information.

The settlement processor 15 handles settlement processing. For example, if a user purchases a product or service using an electronic coupon received through this electronic coupon system according to this embodiment of the present invention, the settlement processor 15 adds a processing fee to the discounted amount determined by the coupon information, and bills the manufacturer providing the product or service. Data about the settlement processed by the settlement processor 15 is stored into the settlement data storage 25 in database 2.

The usage data processor 16 collects information about how the registered users actually use this electronic coupon system, and stores the collected data to the usage data storage 26 in the database.

The data collection processor 17 collects additional information about particular users by, for example, selecting a particular user or users based on users' usage information collected by the usage data processor 16, and then surveying the selected users. The collected data is stored to the collected data storage 27 of the database 2.

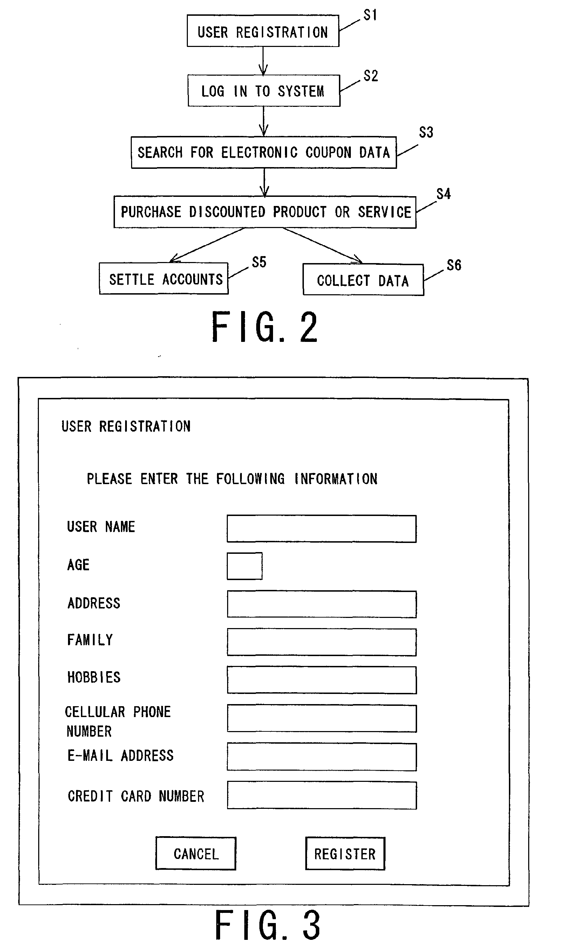

The basic operation of the electronic coupon system according to this preferred embodiment of the present invention is described next with reference to the flow chart in Fig. 2. Note that each of the steps shown in Fig. 2 is described in detail further below, and Fig. 2 simply clarifies the overall flow of the process.

For a user to use this electronic coupon system, the user must first complete the user registration process (step S1). While not shown in this flow chart, manufacturers must also complete a similar manufacturer registration process in order to use this electronic coupon system. The electronic coupons must also be reregistered with the system. While the electronic coupon data is described herein as being registered by the manufacturer, the invention shall not be so limited as the seller could also register information for store coupons.

After a user registers, the user must log in each time he wants to use the electronic coupon system (step S2). The user can log in to the system by, for example, inputting and sending to the system the member number and password assigned by the system or selected during user registration. This information is input from the user cellular phone 5 or user terminal 3.

After logging in, the user can search for electronic coupons using the user cellular phone 5 or user terminal 3 (step S3). In this example, by searching for electronic coupon information, users obtain information about discounted products, the type of discounted service, stores at which the electronic coupons can be used, and the discount.

If as a result of this search the user finds an electronic coupon to use, the user purchases the product or service using the electronic coupon (step S4). To do this, the user goes to a store where the electronic coupon can be used, and purchases the product or service.

Various settlement processes are performed if user purchased the product or service (step S5). For the store, the settlement process includes collecting payment of the amount after the discount (the "discounted amount") from the user, and billing the manufacturer through the coupon service provider for the discount (the value of the coupon). The coupon service provider also bills the manufacturer for a system usage fee (a service provider fee).

When a user buys a product or service using an electronic coupon, information about the electronic coupon and information identifying the user of the coupon is sent to the server 1 via communication network 10. The system can then analyze the received information and use it for market research, for example (step S6).

An exemplary user registration process (step S1 in Fig. 2) is described next with reference to Fig. 3. Fig. 3 shows a user registration screen presented on the display of user terminal 3. This screen is presented when the user selects the user registration option from the menu selections displayed at the first screen presented by the electronic coupon system. As shown in Fig. 3, the user is prompted to "please enter the following information," and is provided with fields for inputting the user name, age, address, family, hobbies, cellular phone number, e-mail address, and credit card number. The user moves the cursor to the appropriate field and inputs the information using a keyboard, mouse, and other input means.

The information input during the user registration process includes identifying information such as the user name and address, as well as user attributes such as age, family composition, and hobbies. The identifying information may not clearly distinct from the user attributes. As noted above, this information also includes the user cellular phone number, which is required because the electronic coupon system of this embodiment presumes that the coupon will be used with a cellular phone. The e-mail address is used for communication between the user and coupon service provider in conjunction with operation of the electronic coupon system. It is also used for conducting surveys under specific conditions after a user has used the electronic coupon system. The credit card number is used, for example, to charge a user a specific fee for illicit use of the electronic coupon system if such use is detected, and for purchase transactions (electronic commerce (EC)) through the electronic coupon system. It should be noted that charging users for unauthorized use of the electronic coupon system requires user agreement of such terms during the user registration process.

After the user inputs the required information and clicks on the "register" button provided at the bottom of the screen in Fig. 3, the input data is sent to the server 1 via communication network 10. The user registration processor 11 of the server 1 receives the data from user terminal 3 and stores the received data into the user data storage 21. When the required registration information is thus input, a member number and password are issued to the user. More specifically, the user registration processor 11 refers to the registration information for other users stored in the user data storage 21 to generate a unique member number and password, and sends the member number and password to the user terminal 3 via communication network 10. The member numbers could be sequential numbers, for example. The user terminal 3 receives the member number and password and the web browser displays them on the screen. The user is thus informed of the issued member number and password. It is also possible that while the password is described as being assigned by the system, the user could alternatively be enabled to select or change the user password. The user must then input this member number and password when logging in to the electronic coupon system (step S2, Fig. 2).

If the user clicks the "cancel" button shown at the bottom of the screen in Fig. 3 instead of the "register" button, all input data is cleared.

Manufacturer registration starts by displaying a manufacturer registration screen on the display of the manufacturer terminal 4. Information required for manufacturer registration includes such manufacturer information as the name of the manufacturer, contact information, and the e-mail address of the system operator, and coupon information such as the product name, discount rate, discount (monetary value), and sale network. Data input from the manufacturer terminal 4 is then sent via communication network 10 to the server 1. The manufacturer registration processor 12 of the server 1 extracts manufacturer identification information from the input data received from the manufacturer terminal 4, and stores the extracted data into the manufacturer data storage 22 in the database 2. The coupon processor 13 of the server 1 similarly extracts the electronic coupon information from the input data received from the manufacturer terminal 4, and stores the extracted data into the coupon data storage 23 in the database 2. When manufacturer registration is completed, the manufacturer registration processor 12 sends a manufacturer member number and password via communication network 10 to the manufacturer terminal 4. The manufacturer must later input the manufacturer member number and password when logging in to the electronic coupon system to change or input new electronic coupon data.

The manufacturer can focus electronic coupon content such as the discount amount quite narrowly or broadly based on the date and time, geographic area, or particular user attributes (clusters). For example, the manufacturer could register electronic coupons that can only be used by female college students. In this case the electronic coupon search provides the coupon information only to users that are registered as female college students, and does not provide the information to other users.

Sellers can also narrowly focus the electronic coupons based on date and time, geographic area, or particular user attributes. For example, a discount might be offered only when it has rained.

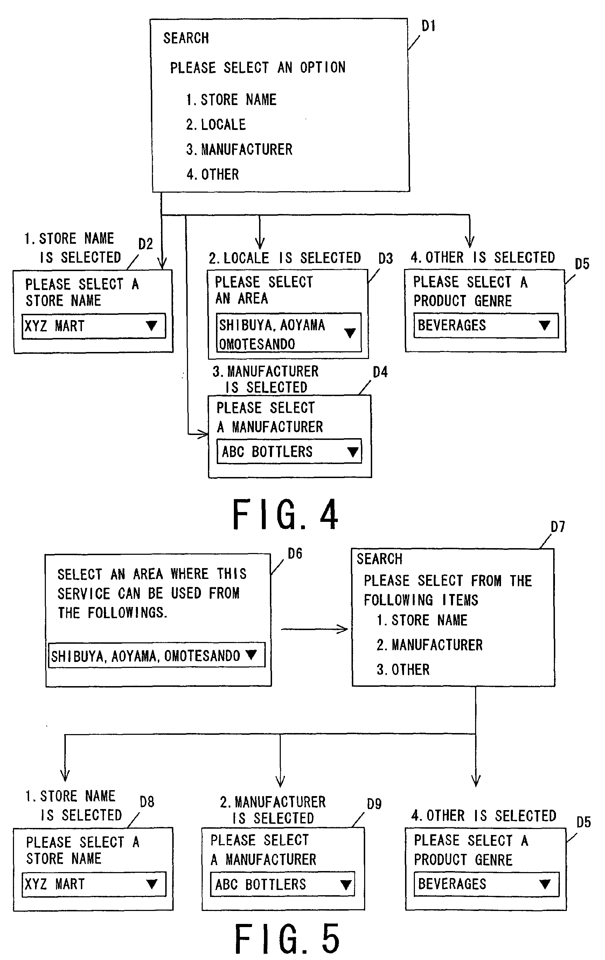

The electronic coupon search ((step S3, Fig. 2) is described next with reference to Fig. 4 and Fig. 5. Fig. 4 and Fig. 5 show examples of screen displays on the user cellular phone 5 for two different types of searches.

Screen display D1 in Fig. 4 shows the initial search screen. This screen shows a prompt to "please select an option", and provides several choices: store name, locale, manufacturer, and other. The desired option is selected by pressing the corresponding number on the keypad of the user cellular phone 5.

Web page data for presenting screen display D1 is generated by the coupon processor 13 of the server 1, and sent to the user cellular phone 5 via communication network 10, relay center 8, and base station 9. When the user makes a selection, the selection is sent from the user cellular phone 5 to the server 1 via base station 9, relay center 8, and communication network 10.

The coupon processor 13 of server 1 receives the user selection, generates the appropriate web page data for screen displays D2 to D5 (further described below), and sends the web page data to the user mobile telephone 5. Note that each web page data for the screen displays shown in Fig. 4 and Fig. 5 is generated through a similar exchange of information.

Screen display D2 is presented when the user indicates in screen display D1 an intent to select a particular store name. In this example a scrollable list of selectable store names is presented. A particular store name is selected by using the appropriate buttons to highlight the desired store and then confirm the selection.

Screen display D3 is presented when the user indicates in screen display D1 an intent to select a geographical area. The desired area can be selected in this case using the same procedure as for selecting the store name in screen display D2.

Screen display D4 is presented when the user indicates in screen display D1 an intent to select a particular manufacturer. The desired manufacturer in this case can be selected using the same procedure as for selecting the store name in display D2.

Screen display D5 is presented when the user indicates in screen display D1 an intent to select something other than store name, area, and manufacturer. A product genre, for example, can be selected in this case using the same procedure as for selecting the store name in display D2.

Screen display D6 in Fig. 5 shows another initial search screen. This example starts by prompting the user to "select an area where this service can be used from the followings." The user is thus forced to first select the geographic area where the service is to be used. The desired area can be selected using the keypad of the user cellular phone 5.

After an area is selected, screen display D7 enables the user to select a store name, manufacturer, or other option. If the user selects the "store name" option, screen display D8 is presented. If the user selects the "manufacturer" option, screen display D9 is presented. If the user selects "other," screen display D10 is presented.

The information transmitted from the server 1 if a user searches for coupon information does not need to be the same for all users. For example, the transmitted information could be varied according to the user attributes (cluster) registered by the user registration processor 11. For example, if the user address is in Tokyo, this area information could be used to find and send only electronic coupons data that can be used in the Tokyo area. It should be noted that electronic coupon searches could be instructed from the user terminal 3 as well as the user cellular phone 5.

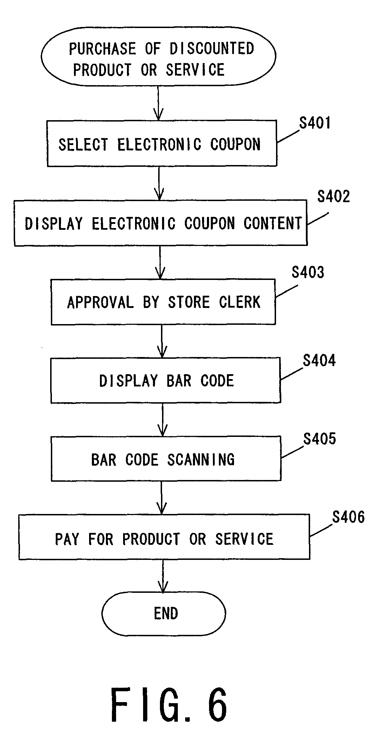

Purchase of a discounted product or service (step S4 in Fig. 2) is described next with reference to Fig. 6, Fig. 7, and Fig. 8.

If a user looks for electronic coupons (step S3, Fig. 2) and finds a coupon to use, the user must then go to the store where the electronic coupon can be accepted. If the user confirms and decides to purchase the product or service at the store, he then uses the user cellular phone 5 to log in to the electronic coupon system according to this preferred embodiment of the present invention. As noted above, the member number and password must be input to log in. The member number and password are thus sent to the server 1 via base station 9, relay center 8, and communication network 10. The user registration processor 11 then verifies the received member number and password based on the user data stored in the user data storage 21. If the user is verified, he is allowed to log in to the system; if the user is not registered or cannot be verified, system access (log in) is denied.

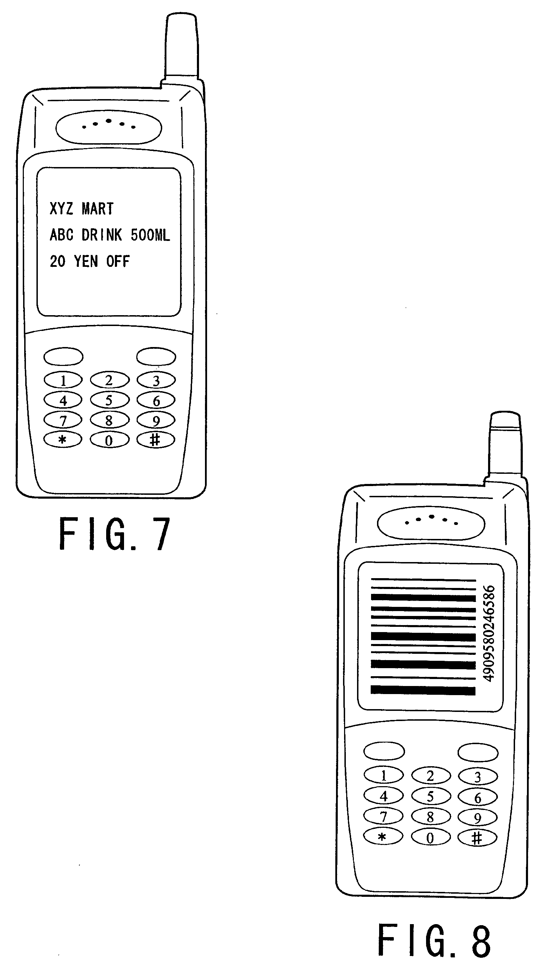

Assuming that the system login is successful, the user then selects an electronic coupon (step S401). The coupon selection is sent to the coupon processor 13 of the server 1. Based on the selection, the coupon processor 13 sends web page data to the user cellular phone 5 in a format (such as compact HTML (hyper text mark-up language), XHTM, or WML) enabling display on the screen of the user cellular phone 5. The user cellular phone 5 receives the web page data and displays the electronic coupon content on screen (step S402). An exemplary screen display in this case is shown in Fig. 7. In this example as shown in Fig. 7 the screen shows the name of the store "XYZ Mart" where the electronic coupon is accepted, the name of the product "ABC drink, 500 ml", and the discount "20 yen off'.

Returning to Fig. 6, the user shows the information displayed on the user cellular phone 5 to the store clerk to obtain an approval for usage of the coupon (step S403).

If the sales clerk approves the usage of the electronic coupon, the user operates the user cellular phone 5 to request the server to send a bar code.

The bar code processor 14 of the server 1 receives and processes bar code requests, and thus generates a bar code. More specifically, the bar code processor 14 reads the information for the electronic coupon to be used from the coupon data storage 23, and reads user identification information from the user data storage 21. The bar code processor 14 then generates a bar code image data based on the read coupon information and user identification information. More specifically, the bar code contains the store name, product name, user member number, and the date and time the bar code is generated. The bar code has 8 or 13 digits, but as described above approximately 20 digits of information are compressed to 8 or 13 digits using a compression technique such as G code compression. The bar code processor 14 sends the resulting bar code image data to the user cellular phone 5 via communication network 10, relay center 8, and base station 9.

The user cellular phone 5 then receives and displays the bar code image from the server 1 (step S404). An exemplary display is shown in Fig. 8. As shown in Fig. 8, the bar code is displayed oriented to the long axis of the user cellular phone 5, but the orientation can be changed as needed or desired. A 13-digit code is also displayed with the bar code. This 13-digit code contains the same information encoded to the bar code. More specifically, the width of the bar code lines and the gaps between the lines are adjusted to represent the same values as shown in the 13-digit code.

The store clerk then uses the bar code scanner 7 that is part of the POS system and is installed in the store to scan the bar code displayed on the screen of the user cellular phone 5 (step S405). More specifically, the store clerk brings the bar code scanner 7 into proximity with the screen of the user mobile telephone 5, and reads the bar code by detecting the reflection of light emitted by the bar code scanner 7. The data captured by the bar code scanner 7 is then processed by the read data processor 61 of the bar code system 6, and transmitted to the server 1 via communication network 10.

The usage data processor 16 of the server 1 receives and stores the captured data to a storage device, and analyzes the captured data. In this analysis step, the usage data processor 16 first extracts the store name, product name, user member number, and bar code generation date and time contained in the bar code. Based on this analysis, the bar code processor 14 determines whether the bar code data is identical to bar code data generated sometime in the past by the bar code processor 14 based on the bar code data stored in the bar code data storage 24.

If the received bar code data is identical to previously generated bar code data, the bar code processor 14 sends information to the effect that the bar code information is valid to the bar code system 6 of the store via communication network 10. The bar code system 6 then runs a settlement process according to the content of the electronic coupon.

If the received bar code data is not identical to previously generated bar code data, or if the bar code is determined to have expired (that is, a predetermined period has passed since the bar code was generated) by comparing the bar code generation date/time information, the bar code system 6 is so notified by sending appropriate information to the bar code system 6 via the communication network 10. It should be noted that the electronic coupon presented by the user to the store clerk couldn't be used in this case.

This processing enables the seller, that is, the point of sale where the electronic coupon is presented for use, to confirm if the electronic coupon is valid or not, and if the coupon is an unauthorized copy.

The electronic coupon content can also be set so that, for example, an electronic coupon that was used once cannot be used again (i.e., the electronic coupon can only be used once), or any single user cannot use even different electronic coupons more than a predetermined number of times. Whether coupon usage meets the specified conditions can be confirmed in such cases by checking the bar code data sent from the seller's bar code system 6 in the server 1.

The coupon processor 62 in the seller's bar code system 6 calculates the discount amount for the price to bill the user (customer) based on the information captured by the bar code scanner 7. For example, if the electronic coupon indicates a 20 yen discount on a 200 yen purchase, the coupon processor 62 subtracts 20 yen from 200 yen, and bills the user (customer) for 180 yen.

The user then pays the adjusted fee for the product or service (step S406). The store issues a sales receipt for the amount after the discount is subtracted.

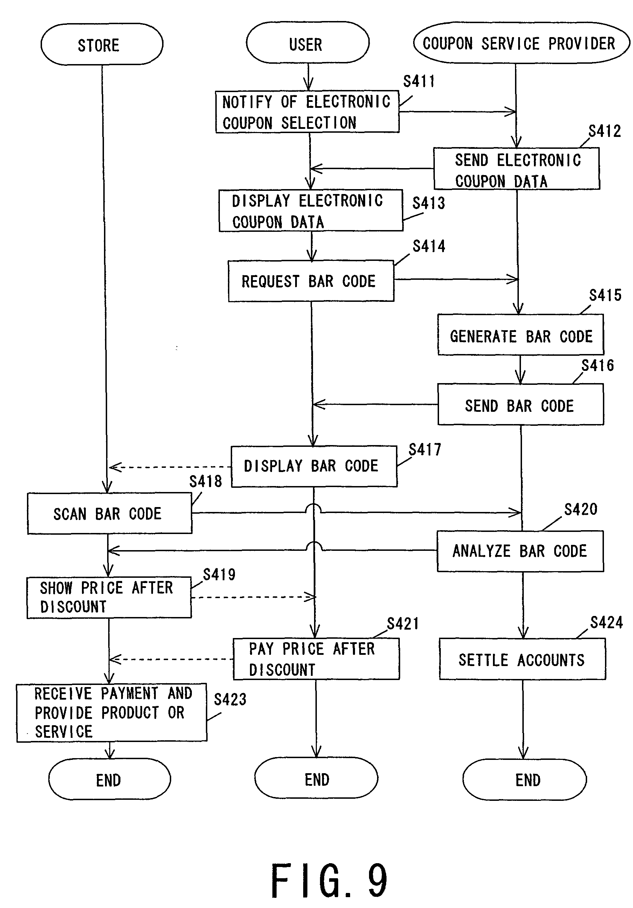

Purchase of a discounted product or discounted service (step S4 in Fig. 2) is described next with reference to the flow chart in Fig. 9. It should be noted that while parts of this process in Fig. 9 duplicate some of the steps shown in Fig. 6, these are further described below to further clarify the roles of the seller, user, and coupon service provider.

The user logs in to the system and then selects an electronic coupon (step S411). The coupon selection is sent to the coupon processor 13 in the server 1. Based on the selection, the coupon processor 13 sends web page data for displaying the electronic coupon content on the screen of the user cellular phone 5 to the user cellular phone 5 (step S412). The user cellular phone 5 receives the web page data and displays the electronic coupon content (step S413).

The user then shows the content displayed on the user cellular phone 5 to the store clerk, and then uses the user cellular phone 5 to request the server 1 to send a bar code after obtaining the approval of the usage of the coupon by the store clerk (step S414). The bar code processor 14 of the server 1 receives this bar code request, reads the requested electronic coupon data being used from coupon data storage 23, and also reads the user identification information from the user data storage 21. Then, based on the read electronic coupon data and user identification information, the bar code processor 14 generates a bar code image data. The bar code processor 14 sends the resulting bar code image data to the user cellular phone 5 via communication network 10, relay center 8, and base station 9 (step S416).

The user cellular phone 5 receives the bar code image data from the server 1 and displays it on screen (step S417).

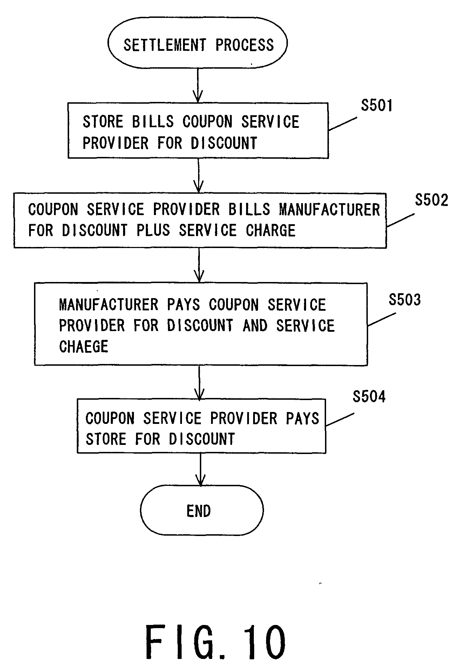

The store clerk then scans the bar code from the screen of the user cellular phone 5 using the bar code scanner 7 (step S418), and the captured information is then processed by the read data processor 61 and sent to the server 1 via communication network 10. The usage data processor 16 of the server 1 receives and analyzes the scanned information (step S420), and the settlement is processed (step S424). This settlement process is further described with reference to Fig. 10.

The coupon processor 62 of the seller's bar code system 6 then performs a discounting process based on the data captured by the bar code scanner 7 to calculate the reduced sale price, and presents the discounted sale price to the user (step S419). If the use then pays the amount (step S421), the product or service is provided to the user (step S423), and the product or service purchase using an electronic coupon is completed.

The settlement process (step S5 in Fig. 2) is further described below with reference to Fig. 10.

As described above, the bar code shown on the display of the user cellular phone 5 is read by the bar code scanner 7 of the seller's bar code system 6 when a product or service is purchased using an electronic coupon, and the captured bar code data is then sent to the server 1. The bar code processor 14 of the server 1 analyzes the encoded bar code data to obtain the discount information, which is also provided to the settlement processor 15. This sequence of operations results in the coupon service provider being billed by the seller for the discounted amount (step S501).

The settlement processor 15 sends billing information, that is, the discount plus a service charge, to the manufacturer terminal 4 via communication network 10 (step S502). The manufacturer then pays the coupon service provider the billed amount using electronic money, for example (step S503). The coupon service provider then pays the end-seller the amount discounted in exchange for the coupon (step S504). Electronic money may also be used for this payment. Payments shall not, however, be limited to electronic money and other payment means can obviously be used, including bank transfer, cash, or check.

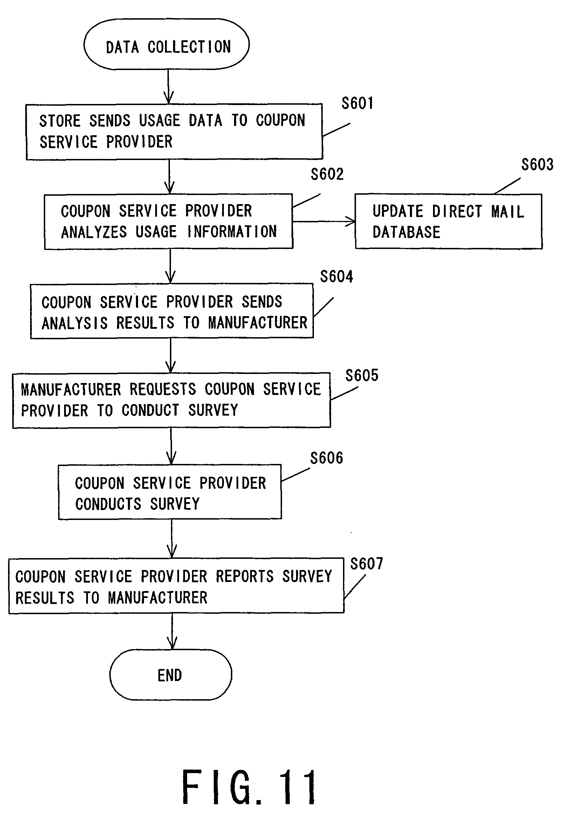

The data collection process (step S6 in Fig. 2) is described next with reference to Fig. 11. In this data collection process, information about the use of electronic coupons is gathered through the electronic coupon system according to the present invention.

As described above, the bar code shown on the display of the user cellular phone 5 is read by the bar code scanner 7 of the seller's bar code system 6 when a product or service is purchased using an electronic coupon, and the captured bar code data is then sent to the server 1. This results in coupon usage information being sent from the seller to the server 1 of the coupon service provider each time an electronic coupon is used (step S601). The bar code processor 14 of the server 1 then analyzes the bar code data to obtain information relating to the electronic coupon and user identification information (step S602). This information is also stored into the usage data storage 26 by usage data processor 16.

The data collection processor 17 analyzes the user identification information and electronic coupon data stored in the usage data storage 26, and detects if a coupon was used for a product previously identified for sending direct mail. If the electronic coupon was used for a specific product for which direct mail will be sent, the user identification information is added to the direct mail address list (a direct mail database, for example (not shown in the figure)) stored in collected data storage 27 (step S603). More specifically, the member number is added to the direct mail list. When direct mail is subsequently sent, the member numbers are used to find the user address in the user data storage 21 in the database 2.

In addition, if a manufacturer, for example, has requested a market survey, the data collection processor 17 conducts a survey using the usage information stored in the usage data storage 26, and sends the result to the manufacturer terminal 4 via communication network 10 (step S604). The manufacturer might, for example, want to analyze who uses electronic coupons for a particular product. In this case the electronic coupon data stored in the usage data storage 26 is searched using the manufacturer's product identifier as the search key to extract the user identification information. The user attributes are then extracted from the user data stored in the user data storage 21 based on the extracted user identification information.

Specific attributes about who used the coupons and who purchased the product can thus be obtained and stored into the collected data storage 27.

The manufacturer could also request the coupon service provider to survey particular users (step S605). In this case the data collection processor 17 surveys the users (step S606). The survey is based on data stored in the collected data storage 27 so that, for example, e-mail is sent to those users known to have purchased the manufacturer's product. The coupon service provider then tabulates the responses, and reports the survey results to the manufacturer that requested the survey (step S607). User responses to the survey could also be encouraged by, for example, offering another coupon. This coupon information can be stored into the user data storage 21 and used in addition to other generally provided coupons.

Data collection is further considered below with reference to Table 1. Table 1 shows the results of analyzing different types of market surveys.

**Table 1**

| METHOD | SURVEY RESULTS | SAMPLE | CLUSTER TYPE | PURCHASE HISTORY SURVEY | TABULATION |
|---|---|---|---|---|---|
| group interview | determine needs and obstacles to use | 7-8 people/group | grouping possible (difficult) | not possible | approx. 1 month |
| on-line survey | determines broad general awareness and need | any number possible (1000 is target) | not possible | not possible | approx. 2 weeks |
| on-line panel discussion | verifies specific needs | approx. 300 | grouping possible | not possible | approx. 2 weeks |
| survey included with product | determines reactions after product use, identifies needs | approx. 100 (response rate: 5%) | not possible | possible | 3 months or more |
| electronic coupon system | determines reactions after product use, identifies needs | any number possible (1000 is target) | grouping possible | possible | approx. 2 weeks |

As shown in Table 1, market surveys such as group interviews, on-line polls, on-line panel discussions, and product enclosure surveys is impossible to perform clustering in order to collect the information wanted by the manufacturer or analyze purchase history. In the electronic coupon system, it is possible to designate even purchased products to be targeted, and surveys combining user clusters and purchased product clusters can be performed.

More particularly, the electronic coupon system of the present invention is an extremely effective means of linking market surveys to sales promotion, rather than simply conducting a market survey, and thus enable both market surveys and sales promotion.

The electronic coupon system described above can also be opened to users without charging a user membership fee or usage fee by, for example, the coupon service provider charging the manufacturer. Manufacturers and sellers can expect an extremely fast sales promotion effect while also capturing accurate marketing data such as market survey result at low cost. The sales outlet can also offer special sales discounts without modifying the product master database, and can offer such discounts with little cost to the seller because the discount is generally reimbursed by the manufacturer.

Furthermore, the stores where the electronic coupon can be used are also displayed with the coupon. This encourages customers to patronize a particular store.

In addition to receiving service charges from the manufacturers based on electronic coupon usage, the coupon service provider can also generate income by charging for market research, charging for advertising placed in the advertising area of the system's home page, charging for user surveys, and providing other ancillary services.

Based on the results of market surveys, it is also possible to send samples to users that purchased a product. In addition to surveying what products were purchased using electronic coupons through the electronic coupon system, it is also possible to examine the relationship between sales outlet and user attributes based on information about the stores where product was purchased.

It is also possible for one with ordinary skill in the related art that while a cellular phone is used by way of example above as a portable communications terminal, a PHS (Personal Handyphone System) handset, Personal Digital Assistant (PDA), or other type of portable communications terminals could be used.

An advantage of using a PHS terminal is that PHS terminals can only be used within a limited range of a base station, and the general location of the PHS terminal can therefore be identified. This can be used when searching for electronic coupons to find electronic coupons usable in that area automatically so that the user need not manually specify a geographic area. Data entry is thus easier for the user. Such searches are possible with any device capable of detecting and providing its location to the server.

Furthermore, the user registration process is described as being completed from the user terminal 3, but user registration can be completed using the user cellular phone 5.

Furthermore, the manufacturer registration process is described as being performed from the manufacturer terminal 4 via communication network 10, but manufacturer registration can be also completed by submitting documents containing the required information to the coupon service provider.

Yet further, the bar code data is generated as an image by the server 1 above, but the invention shall not be so limited. That is, the server 1 could simply generate and send numeric data to the user cellular phone 5 so that the user cellular phone 5 or other portable communication terminal generates the bar code image from the received information. The cellular phone 5 or other portable communication terminal must have a program or means for generating images in this case, but the advantage is a dramatic reduction in the amount of data that must be sent from the server 1 to the cellular phone 5.

Yet further, the bar code data described above contains both data related to the electronic coupon content, and user identification information. The invention shall not be so limited as the bar code information could contain only information relating to the electronic coupons. This will at least enable to confirm whether the content of electronic coupons presented by a user is valid or not.

### B. Embodiment 2

As described above, bar code data for each product or service for which an electronic coupon is valid is shown on the display of a cellular phone and scanned wherefrom at the point of sale in the first embodiment of the invention described above. The second embodiment described below differs in that the bar code data is displayed on the display of the cellular phone and scanned by the bar code scanner when only once the fee for the product or service is paid. This reduces the time and effort needed for the payment. In addition, the end-seller marketing the product or service for which the electronic coupon is valid does not pay back the discount at the point of sale. Instead, the discount due for electronic coupons used during a certain period of time is rebated in one lump sum to the user. This means that attempts to use illicitly obtained bar code information will yield no benefit to the illicit user, and measures for preventing illicit use are unnecessary.

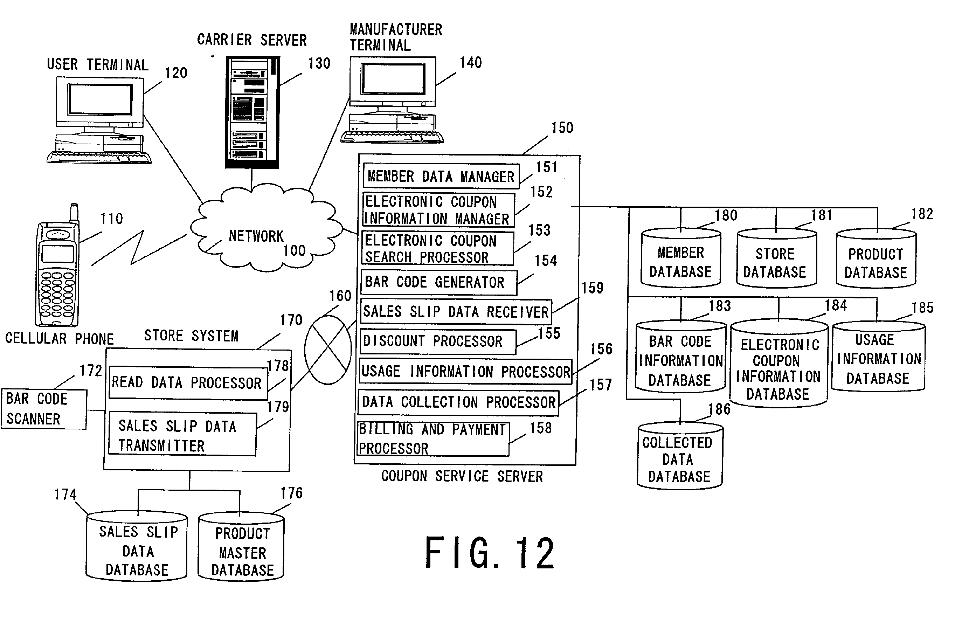

Fig. 12 shows an outline of an electronic coupon system according to a second preferred embodiment of the present invention. As shown by way of example in Fig. 12, one or a plurality of user terminals 120, a carrier server 130 managed and maintained by a telecommunications service provider, one or a plurality of manufacturer terminals 140, one or a plurality of cellular phones 110, and a coupon service server 150, are connected to or can be connected to a network 100 such as the Internet. The user terminals 120 are used by user members and have a web browser function. The carrier server 130 is run by a cellular phone service provider, for example, and calculates and bills for communication charges. The manufacturer terminals 140 are used by manufacturer members, for example, which refers to any user of the coupon providing service as described in the first embodiment, and also have a web browser function. The cellular phones 110 are also equipped with a display for displaying text and graphics (images). The coupon service server 150 runs the major processes of the coupon service provided by this second embodiment of the invention.

The user terminals 120 and manufacturer terminals 140 can be personal computers, for example, or even mobile terminal devices. The cellular phones 110 can be cellular telephones, PHS handsets, or other type of mobile terminal device.

One or a plurality of store systems 170 are connected to the coupon service server 150 via a public network 160 or other network system, for example. The store system 170 includes a POS system used at the retail store or other point of sale.

A bar code scanner 172 is connected to the store system 170. The bar code scanner 172 is used for reading bar codes from the actual products or from the display device of the cellular phone 110 in this embodiment of the present invention. A cash register (not shown in the figure) is also connected to the store system 170. The store system 170 also has a read data processor 178 and a sale slip data transmitter 179. The read data processor 178 processes the bar code data scanned by the bar code scanner 172 and stores the data as sales slip data into the sales slip database 174. The sales slip data transmitter 179 sends the sales slip data to the coupon service server 150. The store system 170 also manages the sales slip database 174 and product master database 176.

The coupon service server 150 is a web server compatible with common HTML, XHTML, compact HTML, WML, and other markup languages. The coupon service server 150 also has a member data manager 151, electronic coupon information manager 152, electronic coupon search processor 153, bar code generator 154, sales slip data receiver 159, discount processor 155, usage information processor 156, data collection processor 157, and billing and payment processor 158. The coupon service server 150 also manages a member database 180, store database 181, product database 182, bar code information database 183, electronic coupon information database 184, usage information database 185, and collected data database 186.

The member database 180 stores information relating to members such as users and manufacturers. The store database 181 stores information about the stores and other business establishments participating in the coupon service. The bar code information database 183 stores the bar code information generated by the bar code generator 154. The electronic coupon information database 184 stores the electronic coupon information registered by member manufacturers. The usage information database 185 stores sales slip data received from the store system 170. The collected data database 186 stores survey responses and other information collected by the data collection processor 157.

The member data manager 151 controls the member registration process for all participating members, including end users, manufacturers, and retail stores (sellers), who uses a user terminal 120 or manufacturer terminal 140, and then manages the registered member data.

The electronic coupon information manager 152 stores the electronic coupon information input by a manufacturer into the electronic coupon information database 184, and operates on the stored data as instructed to change or delete data, for example.

The electronic coupon search processor 153 searches for a desired electronic coupon according to instructions from a user terminal 120 or cellular phone 110.

The bar code generator 154 generates bar code information for the desired electronic coupon in response to instructions from the cellular phone 110, and stores the generated bar code information into bar code information database 183.

The sales slip data receiver 159 receives the sales slip data from the sales slip data transmitter 179 of the store system 170, and stores the received data into usage information database 185.

The discount processor 155 determines the amount to refund to a user based on the sales slip data.

The usage information processor 156 analyzes data stored in the usage information database 185, member information database 180 and store database 181 to generate information for the manufacturer and information for the sellers.

The data collection processor 157 sends surveys to users that have purchased a particular product or service, for example, based on a specific survey request by a manufacturer, and then analyzes the results of the survey.

The billing and payment processor 158 generates bill statements and payment statements for the seller, manufacturer, telecommunications service provider, user, and other in the sale chain based on the discount calculated by the discount processor 155.

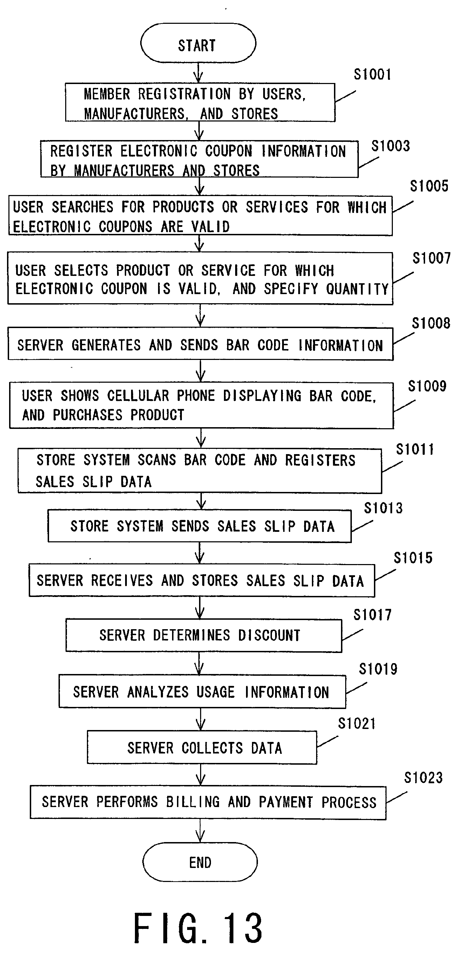

The overall operation and flow of this business system is described next below with reference to Fig. 13.

The user, manufacturer, and stores participating in the coupon service (referred to below as simply "stores") must first register themselves as members with the coupon service server 150 (step S1001). The manufacturer or store also registers electronic coupon information about the product or service for which a discount is offered and its discount amount to the coupon service server 150 (step S1003).

Using a cellular phone 110, for example, a user searches for a product or service for which an electronic coupon can be used (hereinafter may be called as "coupon product or service") (step S1005), and if one or more such products or services are found, he selects one or a plurality of desired products or services and specify a quantity to be purchased for each product or services (step S1007). The coupon service server 150 then generates bar code information containing user identification information and identification information identifying the combination of coupon products or services. This bar code information is then sent to the users cellular phone 110 (step S1008). This bar code information is described in further detail below. The cellular phone 110 receives the bar code information.

The user shows the cellular phone 110 on which the bar code information is displayed to the store clerk to complete the purchase of the product or service (step S1009). The clerk uses the bar code scanner 172 to read the product or service bar code and also scan the bar code information displayed on the display of the cellular phone 110.

The store system 170 creates sales slip data using the scanned bar code information and data retrieved from the product master database 176 and stores the sales slip data to the sales slip database 174 (step S1011). Part of this sales slip data is printed by the cash register, for example, as a customer receipt. At some predetermined interval, such as once a day, the store system 170 sends the sales slip data stored in the sales slip database 174 over the public network 160 to the coupon service server 150 (step S1013). The coupon service server 150 then stores the sales slip data from the store system 170 into the usage information database 185 (step S1015).

The coupon service server 150 calculates the amount to be rebated to the user based on the sales slip data stored in the usage information database 185 (step S1017). This rebate could be refunded as, for example, a reduction of the monthly cellular phone communication charges. Using information from the usage information database 185, member database 180, and store database 181, the coupon service server 150 analyzes the usage data to generate discount statements for each store, determine the coupon-user area code distribution for each store, sales of products purchased with a coupon, discount totals for each product, and electronic coupon clusters for each store (step S1019). The coupon service server 150 also runs a data collection process whereby it sends direct mail or surveys to users that have purchased particular products or services as requested by the manufacturer or store, and tabulates the survey results (step S1021). A billing and payment process is also run to generate bill statements for the total discount provided plus a service charge for the manufacturer or store that used the coupon service to provide a discount, and payment statements for the total discount amount plus the service charge to telecommunications service providers participating in the coupon service (step S1023). The service charge for stores and telecommunication service providers may be 0.

The above described process makes it possible to issue bar codes which represents electronic coupon for one or a plurality of coupon products or services to a cellular phone 110, and the store can complete the discount operation by scanning the bar code only once at the time the product or service is purchased. The sale transaction is also completely easier for the store because the store does not need to calculate any discount. It is also not necessary to pay particular attention to unauthorized coupons because the discount is rebated to the buyer after the purchase is completed instead of deducting the discount from the sale price at the time of the sale. The trouble of paying the discount to the buyer user is also reduced, and rebates can be more reliably paid, because the discount is rebated by subtracting an equal amount from the user's monthly cellular phone communication charge.

Steps S1017 to S1023 in Fig. 13 are described in further detail below with reference to the accompanying flow charts.

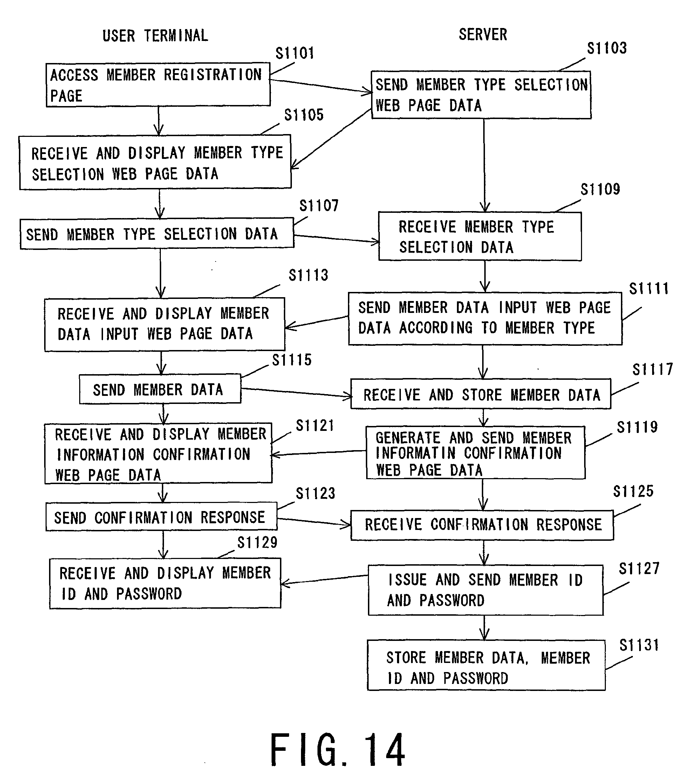

Step S1001 in Fig. 13 is described first with reference to the flow chart in Fig. 14. Note that while the member registration process is described below with reference to the registering a user, the procedure is the same for manufacturer registrations and store registrations.

First, the user accesses the member registration page of the coupon service server 150 from the user terminal 120 (step S1101). In response, the member data manager 151 of the coupon service server 150 sends member type selection web page data (an HTML file and any referenced image files, for example) to the user terminal 120 (step S1103). Web page data for selecting whether a general user, manufacturer, or store is to be registered is sent in this case. The user terminal 120 receives web page data for this member type selection from the coupon service server 150 and presents it on the display (step S1105). The user then selects the appropriate member type from the screen, and operates the user terminal 120 to send the type selection back to the coupon service server 150 (step S1107).

The member data manager 151 of the coupon service server 150 receives the member type selection from the user terminal 120 (step S1109), and then sends web page data for the appropriate member data input back to the user terminal 120 (step S1111). Note that because a "user" was previously specified as the member type, the member data input web page data is returned for registering a general user. The user terminal 120 thus receives web page data for the member data input from the coupon service server 150 and displays the input screen on the display (step S1113).

Information that might be requested to a general user includes the user's address, name, sex, date of birth, occupation, marital status, family configuration, cellular phone service provider, type of cellular phone, e-mail address for cellular phone, normal e-mail address, monthly disposable income, hobbies, interest in receiving new product announcements, how the user learned about the coupon service, and frequented stores. Requested hobby information might include sports, music (whether the user performs or listens), fashion, art and design, cars and motorcycles, traveling, shopping, health and beauty, cooking, computers and electronic games. New product announcements could be for non-durable consumables, such as snack foods and candy, food, beverages, beauty and personal care products (such as shampoo and soap), stationery, clothing, and cosmetics, or for durable consumer products such as home appliances, personal computers and peripherals, CDs and videos, personal effects and accessories, clothing, lingerie, games and toys, sporting goods, automotive or motorcycle products, and reading materials. Sources for learning about the coupon service could include traditional media such as television, radio, newspapers, fliers, direct mail, magazines, posters, and other forms of advertisement, and new Internet-based media such as web sites, community resources such as mailing lists and chat rooms, e-zones, direct mail delivered via the Internet, cellular phone sites, and e-mail delivered to the cellular phone. Frequented store selections could include convenience stores, supermarkets, grocery stores, home centers, discount stores, warehouse stores, specialized chain stores, specialized independent retailers, and department stores. Some of the registered information could be input with radio buttons, for example. Some items could also be required while others are made voluntary.

Data requested when registering a manufacturer includes the address, company name, and types of products. Data requested when registering a store includes the address, store name, and type of store (products handled).

The user then inputs the member information as requested by the member data input web page shown on the display, and then sends the data to the coupon service server 150 (step S1115). The member data manager 151 in the server 150 receives this information and stores it into a storage device (step S1117). The member data manager 151 also generates and sends to the user terminal 120 an input content confirmation web page data (step S1119). The user terminal 120 receives the confirmation web page data from the coupon service server 150 and displays it on the display (step S1121). The user then confirms the content displayed on this confirmation web page, and clicks an "OK" button to confirm the registration of the input data. A "cancel" button could be clicked to cancel the registration, or an "edit" button could be clicked to change the content. The user terminal 120 thus sends the user selection as the confirmation response (OK, cancel, edit) to the coupon service server 150 (step S1123).

The member data manager 151 of the server 150 receives the confirmation response from the user terminal 120 (step S1119), and a process, which depends upon the content of the response, is performed. If the user cancelled the registration, processing stops. If the user clicked the edit button, the member data manager 151 generates web page data for a member data input containing the previously input data so as to display it at the appropriate fields, and sends this web page data to the user terminal 120. If the user clicked the OK button, the member data manager 151 issues a member ID and password and sends the member ID and password to the user terminal 120 (step S1127). It is also possible to have the user select the member ID, password, or the member ID and password, but the member ID and password are generated by the member data manager 151 of the server 150 in this embodiment. The password can also be changed by the user.

The user terminal 120 then displays the member ID and password received from the server 150 (step S1129). The user records the member ID and password for subsequent use when logging in to obtain an electronic coupon. The member data manager 151 also stores the member information, member ID and password to the member database 180 (step S1131). Once this is completed, the user can use the coupon service. Member information (such as the member's sex, age, address, and hobbies) can also be used to determine the types of electronic coupons offered to a particular user, and to analyze purchasing patterns after the electronic coupons are used.

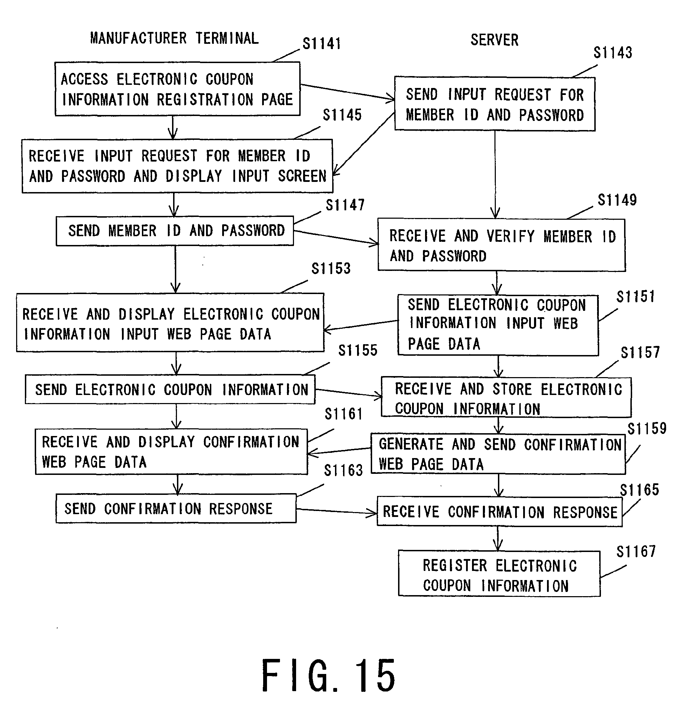

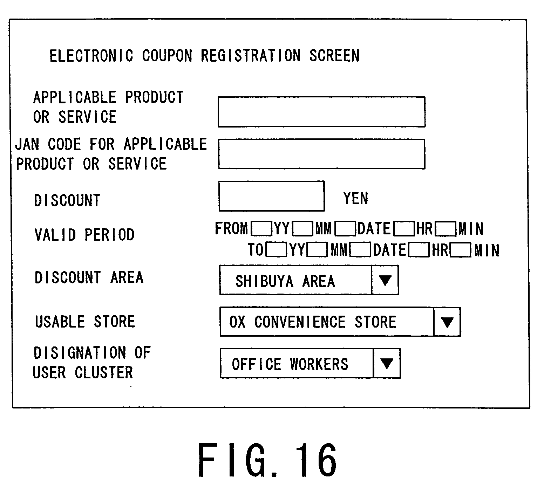

The process whereby a manufacturer registers electronic coupon information to the server 150 is described next with reference to Fig. 15 and Fig. 16.

Using the manufacturer terminal 140, a manufacturer employee accesses the electronic coupon information registration page of the server 150 (step S1141). The electronic coupon information manager 152 of the server 15 then returns a member ID and password input request to the manufacturer terminal 140 (step S1143). When the member ID and password input request is received from the server 150, the manufacturer terminal 140 displays a member ID and password input screen on the display (step S1145). The manufacturer employee then uses the manufacturer terminal 140 to input and send the member ID and password to the server 150 (step S1147). When the member ID and password are received from the manufacturer terminal 140, the electronic coupon information manager 152 checks the member database 180 to verify the user (step S1149). If verification fails, a verification error message is sent to the manufacturer terminal 140.

If verification is successful, the electronic coupon information manager 152 sends web page data for inputting electronic coupon information to the manufacturer terminal 140 (step S1151). The manufacturer terminal 140 then receives and displays web page data for inputting electronic coupon information (step S1153). The displayed screen might look something like that shown in Fig. 16. In this example there are fields for inputting name of the product or service for which the electronic coupon can be used, the JAN code of the product or service, the discount, the discount period, the discount area, specific stores, or a specific user cluster. The electronic coupon information manager 152 may search the product database 182 based on the name of the product or service to find the JAN code. Conversely, the JAN code could be input so that the name of the corresponding product or service is found in the product database 182.

The discount area can be skipped if not desired. The discount area can also be specified in this example for certain predefined regions, but concrete designation of the discount area may be possible. This is also true for specifying individual stores or user clusters.

The manufacturer employee thus inputs data according to the electronic coupon information input screen and then sends the electronic coupon information from the manufacturer terminal 140 to the server 150 (step S1155). The electronic coupon information manager 152 of the server 150 receives and stores into a storage device, the electronic coupon information from the manufacturer terminal 140 (step S1157), and generates and sends to the manufacturer terminal 140 a confirmation web page data for confirming the electronic coupon information (step S1159). The manufacturer terminal 140 thus receives and displays the input content confirmation web page from the server 150 (step S1161). The manufacturer employee then checks the information and clicks on a cancel button to cancel registration, clicks on an edit button to edit the information, and clicks on an OK button to confirm the information. The manufacturer terminal 140 sends the corresponding cancel, edit, or OK response to the server 150 (step S1163).

The electronic coupon information manager 152 of the server 150 then receivers and interprets the response from the manufacturer terminal 140 (step S1165). The electronic coupon information manager 152 cancels the process if the cancel button was clicked, and generates and sends to the manufacturer terminal 140 web page data for inputting electronic coupon information with the previously input content embedded in the appropriate fields if the edit button was clicked. If the OK button was clicked, the electronic coupon information received in step S1157 is registered into the electronic coupon information database 184 (step S1167).

The electronic coupon information thus registered can then be searched by users matching the conditions (user cluster) indicated by the electronic coupon information.

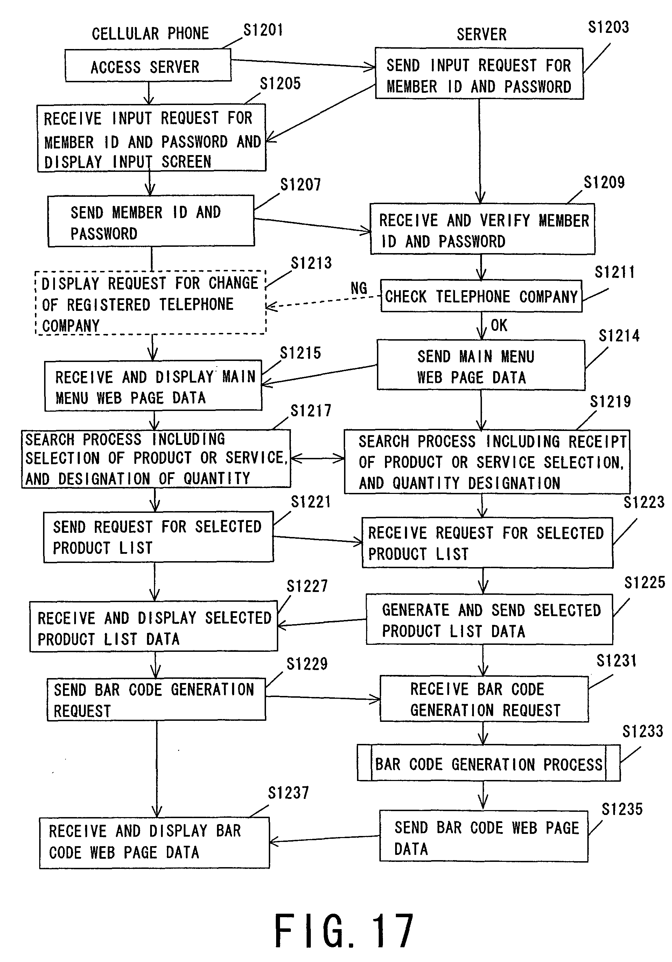

Steps 1005 to S1008 in Fig. 13 are described in further detail below with reference to Fig. 17 to Fig. 24.

The process starts with the user accessing the server 150 from the cellular phone 110 (step S1201, Fig. 17). The server 150 responds by sending web page data for inputting member ID and password (a compact HTML, XHML, or WML and any necessary image files, for example) to the cellular phone 110 (step S1203). The cellular phone 110 receives and displays web page data for the member ID and password input (step S1205). The user then inputs the member ID and password to the cellular phone 110 and sends it to the server 150 (step S1207).

The server 150 receives the member ID and password from the cellular phone 110, and references the member database 180 to verify the member ID and password received (step S1209). If verification fails, a message to that effect is sent to the cellular phone 110. If verification is successful, the server 150 confirms whether the telecommunication service provider being used is the telecommunication service provider registered in the member database 180 (step S1211). The telephone number may also be reported to the server 150, in which case the server 150 also checks if the reported telephone number matches the telephone number in the member database 180. If the telecommunication service provider being used does not match the registered telecommunication service provider, the server 150 requests the cellular phone 110 to report a change of telecommunication service provider. If a change request of telecommunication service provider is received from the server 150, the cellular phone 110 displays the request (step S1213). This is necessary to rebate the total discount by crediting the amount against the cellular phone communication charges.

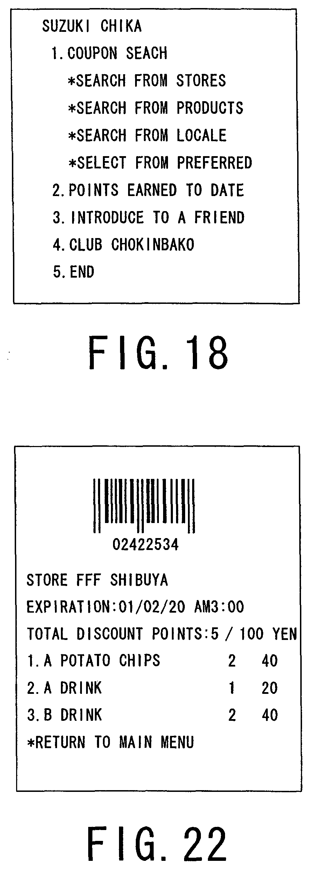

If the telecommunication service provider is the registered telecommunication service provider, the server 150 sends main menu web page data to the cellular phone 110 (step S1214). The cellular phone 110 then receives the main menu web page data from server 150 and displays the main menu on screen (step S1215). An example of this main menu is shown in Fig. 18.

In this example, a user named "Suzuki Chika" is logged in. The menu in the example in Fig. 18 provides the following selections: (1) coupon search; (2) current point total (for displaying the total accumulated points); (3) introduce to a friend (a process for recommending the coupon service to a friend); (4) Club Chokinbako (for displaying member information); and (5) end (for quitting the service). The "coupon search" includes flowing options: "search from stores" (for finding products or services for which search from stores electronic coupons can be used from the stores), "search from products" (for finding products or services for which electronic coupons can be used based on the product type); "search from locale" (for finding products or services for which electronic coupons can be used based on store location); and "select from preferred" (for finding products or services for which electronic coupons can be used based on user preferences). These user preferences can be registered during product searches.

Let us assume that a coupon search was selected. In this case the user communicates with the electronic coupon search processor 153 of server 150 to select the products or services for which electronic coupons can be used and to specify a desired quantity by using the cellular phone 110 (step S1217 and S1219). More specifically, the electronic coupon search processor 153 searches the electronic coupon information database 184 based on the search conditions from the cellular phone 110, and sends electronic coupon information matching the search conditions to the cellular phone 110. The server 150 then receives the product or service selection and quantity information from the cellular phone 110.

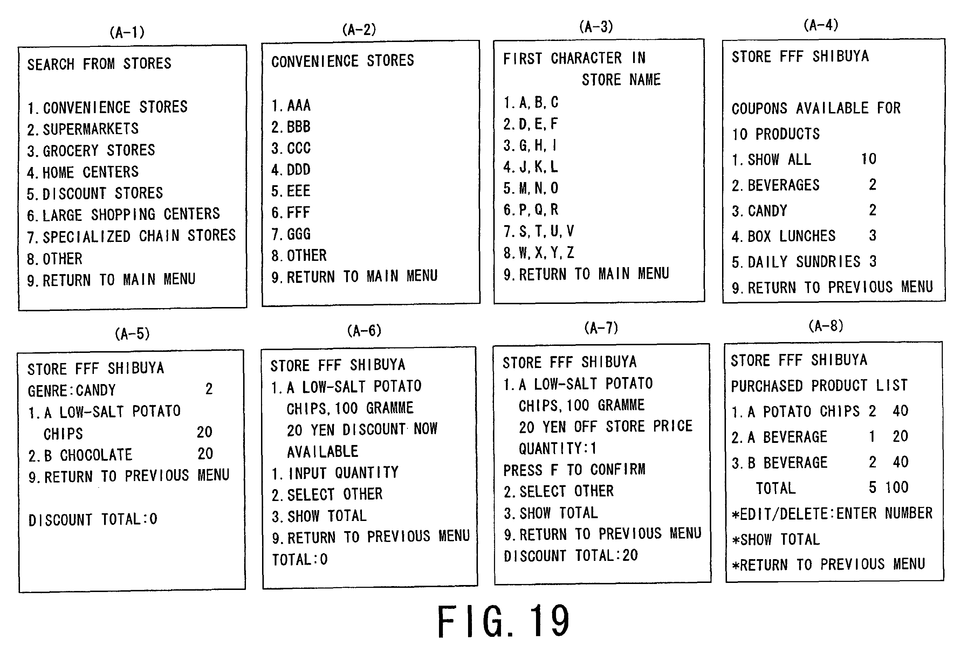

This search process is described below with reference to Fig. 19 to Fig. 21.

If "search from stores" is selected in Fig. 18, web page data such as shown in Fig. 19 (a-1) is sent from the electronic coupon search processor 153 to the cellular phone 110 and then displayed on the cellular phone 110. Choices displayed in this example include convenience stores, supermarkets, grocery stores, home centers, discount stores, and large shopping centers. If the user selects convenience stores in (a-1), web page data such as shown in (a-2) is sent from the electronic coupon search processor 153 to the cellular phone 110 for display on the cellular phone 110. Choices displayed in this case include AAA, BBB, CCC, DDD, EEE, FFF, and GGG. If the user selects FFF in (a-2), web page data such as shown in (a-3) is sent from the electronic coupon search processor 153 to the cellular phone 110 for display on the cellular phone 110.

Choices displayed in this example include the first character in the store name, in this case (1)a, b and c (2)d, e and f, (3)g, h and i (4)j, k and 1 (5)m, n and o (6)p, g and r (7)s, t, u and v or (8)w, x, y and z. If the user selects "(7)s, t, u and v" in (a-3) and if "Shibuya stores" is selected in the next page, web page data such as shown in (a-4) is sent from the electronic coupon search processor 153 to the cellular phone 110 for display on the cellular phone 110. In this case product genres are displayed. Choices in this example include show all, beverages, candy, box lunches, and daily sundries. If the user selects "candy" in (a-4), web page data such as shown in (a-5) is sent from the electronic coupon search processor 153 to the cellular phone 110 for display on the cellular phone 110. Choices in this example include "A low-salt potato chips" and "B chocolate."

If the user selects "A low-salt potato chips" in (a-5), web page data such as shown in (a-6) is sent from the electronic coupon search processor 153 to the cellular phone 110 for display on the cellular phone 110. In this example, a discount of 20 yen off the store price for "A low-salt potato chips" is indicated, and selections are provided for entering a quantity, selecting something else (that is, not selecting the potato chips), and outputting the total (causing a bar code to be generated for the selected products). The total discount due is shown on the bottom line of the screen. A total discount of 0 yen is shown in this example because no product is selected.

If the user selects "quantity" in (a-6), web page data such as shown in (a-7) is sent from the electronic coupon search processor 153 to the cellular phone 110 for display on the cellular phone 110. The screen shown in (a-7) is for inputting a quantity. In this example the "F" button is pressed to enter the selection, and the quantity is sent to the server 150 and the selection and quantity of "A low-salt potato chips" and fixed. In the screen (a-7), following options and included: "select other" to select additional products, "show total" to generate a bar code for the selected products, and "return to previous" to return to the previous menu.

Screen (a-8) is described further below.

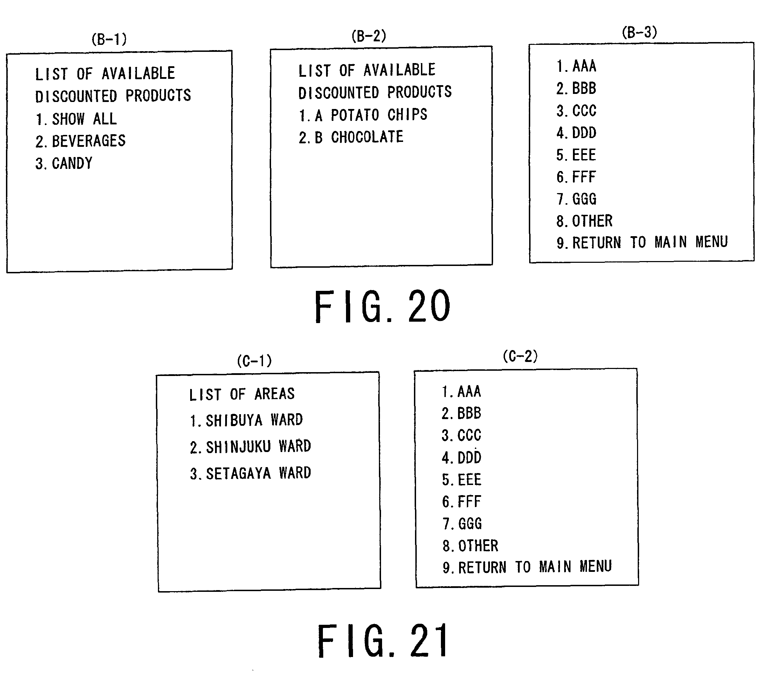

If the user selects "search from product" in the screen shown in Fig. 18, web page data such as shown in (b-1) in Fig. 20 is sent from the electronic coupon search processor 153 to the cellular phone 110 for display on the cellular phone 110. Menu selections in this case include show all, beverages, candy, and other product genres. If "candy" is selected in (b-1), web page data information such as shown in (b-2) is sent from the electronic coupon search processor 153 to the cellular phone 110 for display on the cellular phone 110. Choices shown in (b-2) include "A potato chips" and "B chocolate." If "A potato chips" is selected in (b-2), web page data such as shown in (b-3) is sent from the electronic coupon search processor 153 to the cellular phone 110 for display on the cellular phone 110. Note that screen (b-3) is substantially identical to screen (a-2), and subsequent operation is the same as from screen (a-2) in Fig. 19.

If the user selects "search from locale" from the screen shown in Fig. 18, web page data such as shown in (c-1) in Fig. 21 is sent from the electronic coupon search processor 153 to the cellular phone 110 for display on the cellular phone 110. Menu selections in this case include a list of municipal wards, including Shibuya Ward, Shinjuku Ward, and Setagaya Ward. Note that the location of the cellular phone 110 can be obtained from the telecommunication service provider. In this case the screen shown in (c-1) could be skipped, or a list of smaller areas within the current ward could be displayed.

If "Shibuya Ward" is selected in (c-1), web page data such as shown in (c-2) is sent from the electronic coupon search processor 153 to the cellular phone 110 for display on the cellular phone 110. Note that screen (c-2) is substantially identical to screen (b-3), and subsequent operation is the same as from screen (a-3) in Fig. 19.

Returning to Fig. 17, if the user requests a list of selected products (by, for example, selecting "show total" in (a-7) or by inputting a quantity and pressing the F button), the cellular phone 110 sends a list request of selected products to the server 150 (step S1221). The electronic coupon search processor 153 of server 150 thus receives the list request of the selected products from the cellular phone 110 (step S1223), and generates and sends the product list information of the selected products to the cellular phone 110 (step S1225). The cellular phone 110 receives and displays the list information of the selected products (step S1227). In this example, a screen such as shown in Fig. 19 (a-8) is displayed. More specifically, the name of a particular store (Convenience Store FFF Shibuya in this example), selected products, quantities and discounts are shown (that is, A potato chips, 2 bags, 40 yen off, one beverage A at 20 yen off, two beverages B for 40 yen off, for a total of five items with a total discount of 100 yen off). Menu items for changing or deleting an item ("edit/delete: enter No."), and for generating and displaying the bar code information ("show total"), are also shown. Note that if the line width of the display on the cellular phone 110 does not allow all information to be displayed on one line, part of the line can be displayed alternatively. For example, if "1. A low-salt potato chips 20" cannot be displayed on one line, the display may be switched between "1. A low-salt 20" and "1. potato-chips 20".

If the user confirms the list of the selected products and is finished selecting all products or services and quantities for which electronic coupons will be used in this shopping trip, the user instructs the system to generate the bar code information. In the example shown in (a-8), the user selects "show total" to send the bar code generation request from the cellular phone 110 to server 150 (step S1231). The bar code generator 154 of server 150 thus runs the bar code information generation process (step S1233). This bar code information generation process is further described below. The bar code generator 154 then sends the bar code information to the cellular phone 110 (step S1235). The cellular phone 110 receives the bar code information from server 150 and displays it (step S1237).

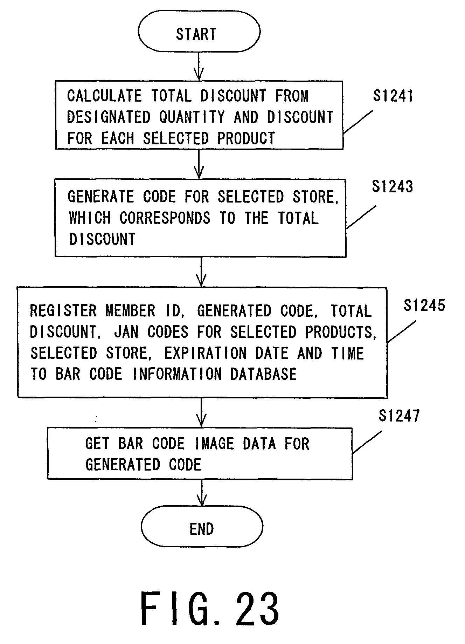

An exemplary bar code information display is shown in Fig. 22. An 8-digit bar code image is shown across the top of the screen. Also shown are the name of the store (FFF Shibuya), expiration date (01/02/20 AM 3:00), total discount product points (5) and the total discount (100 yen), and a list of selected products (A potato chips, A drink, B drink). This bar code is read by the bar code scanner 172 in the store. It should be noted that the process described below could be run even if only the bar code information is displayed.

The bar code information generation step (S1233 in Fig. 17) is described in detail below using Fig. 23.

The bar code generator 154 calculates the total discount based on the discount and purchased quantity of each product (step S1241). The discount provided for the selected products is stored in the electronic coupon information database 184, and can be retrieved for calculation. A code corresponding to the total discount is then generated for the designated store (step S1243).

This embodiment of the present invention generates an 8-digit bar code. The first digit is set to 0, indicating that a local rule is used. The second and third digits are a classification code; a classification code not used by the retailer is used. That is, the bar code is generated using a classification code not used by the specified store. The fourth to seventh digits include a two-digit code for the total discount, and a serial number for the two-digit code. Note that the discount unit can be set to 1 yen, 10 yen, or 100 yen, for example so that a code of 99xx (where xx is the serial number) could mean 99 yen, 990 yen, or 9900 yen. Which unit is used is stored in the bar code information database 183. Because the serial numbers range only from 00 to 99, the classification code (second and third digits) can be changed if the serial numbers run out. The relationship between serial numbers and member ID is also stored to the bar code information database 183, and which specific user used the electronic coupon (bar code) can therefore be determined. The bar code generation processor 154 references the bar code information database 183 to obtain the next usable serial number. The eighth digit is a parity code. It should be noted that digits 4 to 7 could also be used as a serial number having a specific correlation to other information stored in the bar code information database 183.

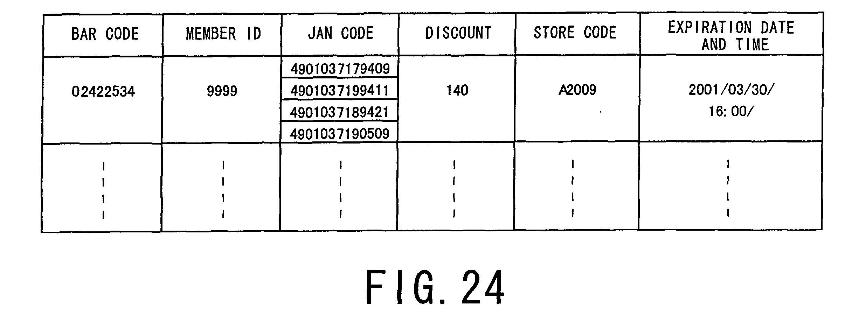

The member ID, generated code, total discount (or discount unit), JAN codes for the selected products (obtained from product database 182, for example), store name, and expiration date and time are stored into bar code information database 183 (step S1245). Storing this information makes it possible to determine when the scanned bar code information for the electronic coupon is received from the store system 170 what user used the electronic coupon in what store, and the product for which the coupon was used. Fig. 24 shows a sample of a database record for storing this information in bar code information database 183. As described above, the stored information includes the bar code, member ID, JAN codes for the selected products or services, discount, store code, and expiration date and time.

As noted above, digits 4 to 7 of the bar code comprises the total discount and a serial number, but the total discount can also be read as identification information for the combination of the user-selected products or services, and user identification information. Because the JAN code is stored in the bar code information database 183 in step S1245, the products or services selected by the user can be identified using the database 183. The correlation between the member number and serial number can also be identified from the information stored in the bar code information database 183.

The bar code generator 154 also obtains the bar code information for the code generated in step S1243 (step S1247) by, for example, reading out the bar code image information stored in bar code information database 183 or store database 181. It is also possible to generate rather than read the image data. Note that in this case it is necessary to reference the cellular phone type information in the member database 180 so as to obtain or generate the bar code image information or so that it can be appropriately displayed on the cellular phone 110.

The bar code information is thus generated. Note that while not shown in Fig. 23 a process is also run for generating the web page data such as shown in Fig. 22 using the information obtained, calculated, and generated in the various steps of the flow chart in Fig. 23.

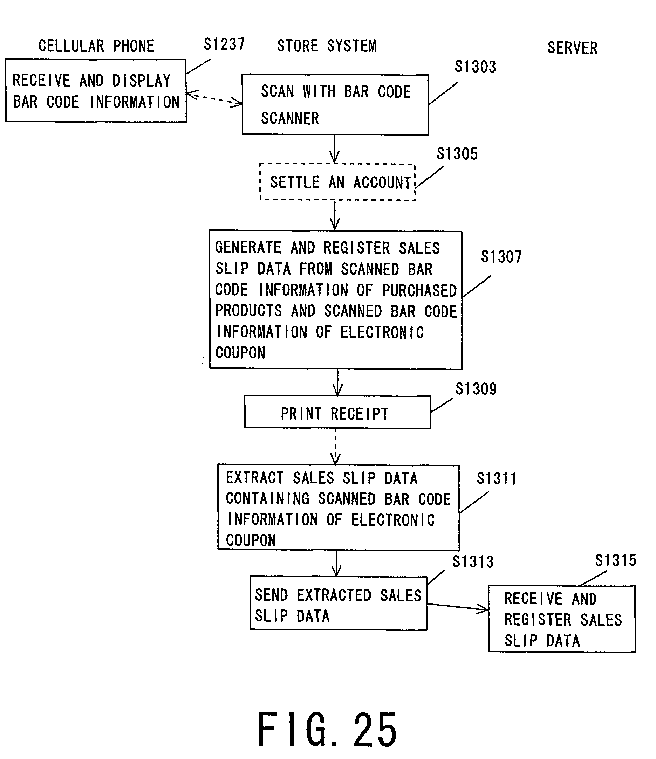

Steps S1009 to S1015 in Fig. 13 are described next with reference to Fig. 25 to Fig. 27.

The process shown in Fig. 25 starts from the last step S1237 in Fig. 17 when the store clerk scans the bar code shown on the display of the user's cellular phone 110 using the bar code scanner 172 of the store system 170 (step S1303). The clerk also scans the bar codes of the purchased products using the same bar code scanner 172. The user then pays for the purchase and the clerk gives the products to the user to end the settlement (step S1305). Note that step S1305 is shown as a dotted line block because this step is performed completely by people.

The read data processor 178 then generates sales slip data using the product bar codes and the electronic coupon bar code captured with the bar code scanner 172, and stores the sales slip data in sales slip database 174 (step S1307). A sales receipt is then printed by the cash register (step S1309) and handed to the user. The user can later use this receipt to confirm that the discount that should be received is correctly credited.

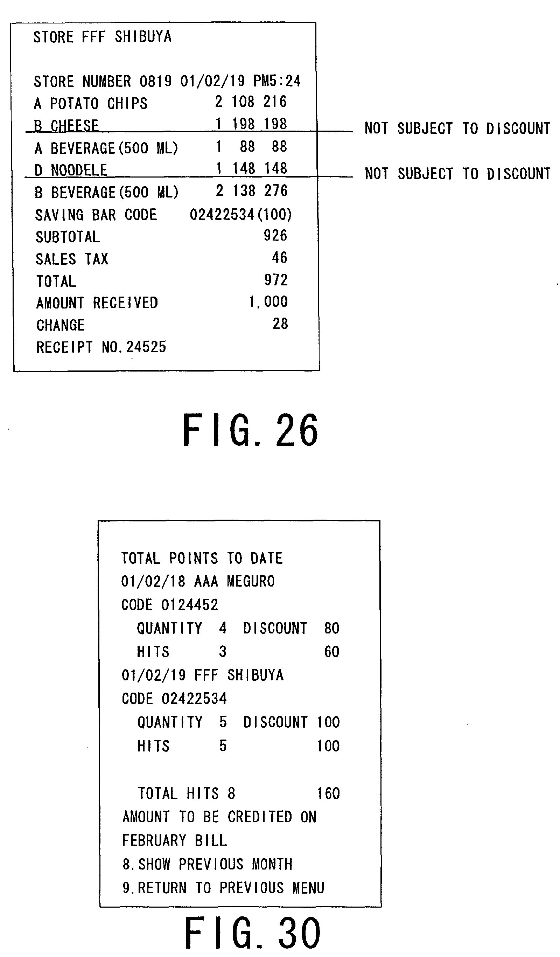

A sample receipt is shown in Fig. 26. In this example the receipt shows the store name (Convenience Store FFF Shibuya) and store number (0819), the sale date and time (01/02/19 PM 5:24), names, quantity, price, and line total for each purchased product (1. product name A potato chips, quantity 2, unit price 108, line total 216; 2. product name B cheese, quantity 1, unit price 198, line total 198; 3. product name A beverage (500 ml), quantity 1, unit price 88, line total 88; 4. product name D noodle, quantity 1, unit price 148, line total 148; 5. product name B beverage (500 ml), quantity 2, unit price 138, line total 276), the scanned electronic coupon bar code information (savings bar code 02422534 (100)). Note that the 100 yen total discount amount is not subtracted at the point of sale. The receipt also shows the subtotal (926), sales tax (46), total (972), amount received (1000), change (28), and receipt number (No. 24525).

In addition to the information shown in Fig. 26, the JAN code for each product is also stored as the sales slip data. More specifically, the read data processor 178 searches the product master database 176 based on the captured bar code information (JAN code) to retrieve the product name and price information and generate the sales slip data and receipt printing data. Note that the bar code information corresponding to the electronic coupon must also be stored in the product master database 176. For example, if the code 02422534 is scanned, it must be possible to recognize that the code 02422534 is the code for an electronic coupon provided by this coupon service. Yet more specifically, all patterns of the electronic coupons that might be used at the store must be registered in the product master database 176 so that errors do not occur when scanning the data.

The sales slip data transmitter 179 then extracts the sales slip data, including the electronic coupon bar code information, from the sales slip database 174 (step S1311), and sends the extracted sales slip data to the server 150 (step S1313). Note that the sales slip data transmitter 179 can send the sales slip data to the server 150 immediately after it is stored in the sales slip database 174, but the sales slip data will usually be sent in batches for each certain period of time, such as once a day. The sales slip data receiver 159 of the server 150 then receives and stores the sales slip data from the sales slip data transmitter 179 of the store system 170 into the usage information database 185 (step S1315).

Thus, the sales slip data, including the bar code information for electronic coupons used by the user, is returned to the server 150 that issued the electronic coupon bar code information.

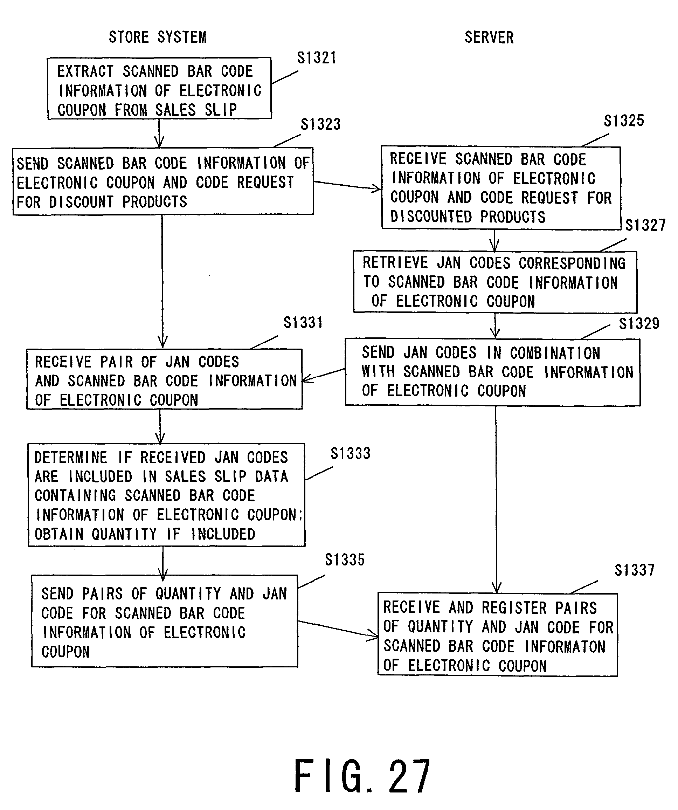

Note that as shown in Fig. 26 the sales slip data includes information about products or services other than those for which electronic coupons were used. There will, therefore, be stores that will resist sending all of the sales slip data to the server 150 due to concerns about privacy or business secrets. A process such as shown in Fig. 27 is used in this case.

That is, the sales slip data transmitter 179 of the store system 170 references the sales slip database 174 to extract the bar code information of the electronic coupon from the sales slips (step S1321). The scanned bar code information for the electronic coupons and a request for the product codes (that is, product identification information, JAN codes in this embodiment) for which the electronic coupons were used are sent to the server 150 (step S1323). The sales slip data receiver 159 of the server 150 then receives the scanned bar code information of the electronic coupon and the request for the product codes (step S1325), references the bar code information database 183, and extracts the JAN codes corresponding to the scanned bar code information of the electronic coupon (step S1327). JAN codes in combination with the scanned bar code information of the electronic coupon are then sent to the store system 170 (step S1329).

The sales slip data transmitter 179 of the store system 170 thus receives a pair of the scanned bar code information of the electronic coupon and JAN codes from the server 150 (step S1331), determines whether the received JAN codes are in the sales slip data containing the scanned bar code information of the electronic coupon, and obtains the quantity if present (step S1333). A pair of the JAN code corresponding to the scanned bar code information of the electronic coupons and the corresponding quantity is then sent to the server 150 (step S1335). It should be noted that there might be plural JAN codes in a single sales slip. This means there may also be plural JAN code and quantity pairs (sets).

The sales slip data receiver 159 of the server 150 then receives and stores data sets of the JAN code and quantity for the scanned bar code information of the electronic coupon from the store system 170 as the sales slip data into usage information database 185 (step S1337).

This effectively eliminates privacy and business secret concerns because the server 150 only receives identification information and quantity data for the products or services associated with the electronic coupons.

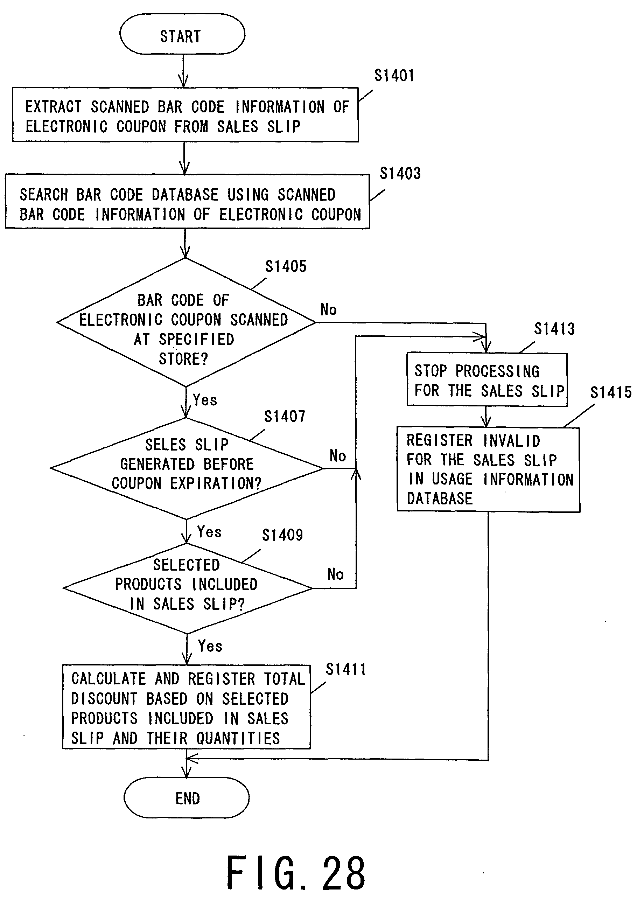

Step S1017 in Fig. 13 is described next with reference to Fig. 28. It should be noted that the steps shown in Fig. 28 process one sales slip, and plural sales slips could be processed by simply repeating the steps in Fig. 28.

The discount processor 155 of server 150 retrieves the scanned bar code information of the electronic coupon from the sales slip data stored in the usage information database 185 (step S1401). The bar code information database 183 is then searched (step S1403) using this bar code information to retrieve the corresponding data. Whether the scanned bar code information of the electronic coupon was used in the store specified when the bar code information was generated is then determined (step S1405) by comparing the store code embedded in the sales slip data with the store code stored in the bar code information database 183. If the store codes do not match, further processing of that sales slip is stopped (step S1413), and that sales slip is flagged as invalid in the usage information database 185 (step S1415).

However, if the scanned bar code information of the electronic coupon is confirmed to have been scanned in (that is, used at) the store specified when the bar code information was generated, whether the sales slip was generated before the expiration is determined (step S1407). This is accomplished by confirming if the issued date and time contained in the sales slip data is before the expiration stored in the bar code information database 183. If not, control skips to step S1413. If the electronic coupon was used before the expiration, it is determined whether identification information (JAN code) for the product or service selected when the bar code was generated is contained in the sales slip data (step S1409). This processing is because the product or service selected when the bar code was generated may not actually be purchased. Because the discount processor 155 of server 150 in this preferred embodiment confirms whether the product or service selected when the bar code was generated was actually purchased, confirmation by the store is easier. If not even one product or service selected when the bar code was generated is contained in the sales slip data, no discount is due and control passes to step S1413.

If there is even just one product or service selected when the bar code was generated in the sales slip data, the total discount due is calculated based on the quantity and identification information (JAN code) of each product or service contained in the sales slip data. That is, the electronic coupon information database 184 is searched using the JAN code to obtain the discount unit for the corresponding product, and the total refund is calculated using the quantity indicated in the sales slip data.

It should be noted that the quantity used here does not have to be the same as the quantity indicated when the bar code information was generated. However, if the purchased quantity exceeds the quantity indicated when the bar code information was generated, a refund may be given for only the quantity indicated when the bar code information was generated. Furthermore, the member ID of the user that used the electronic coupon can be identified by searching the bar code information database 183 using the scanned bar code information of the electronic coupon, and the calculated total discount can then be stored in the member database 180 for the identified user (member ID) (step S1411).

The discount to refund can thus be determined by the server 150 processing the sales slip data using the bar code information database 183 and electronic coupon information database 184. It should be noted that this embodiment of the present invention allows a discount to be given if the type of purchased product or service is the same as the type of product or service specified when the bar code information was generated.

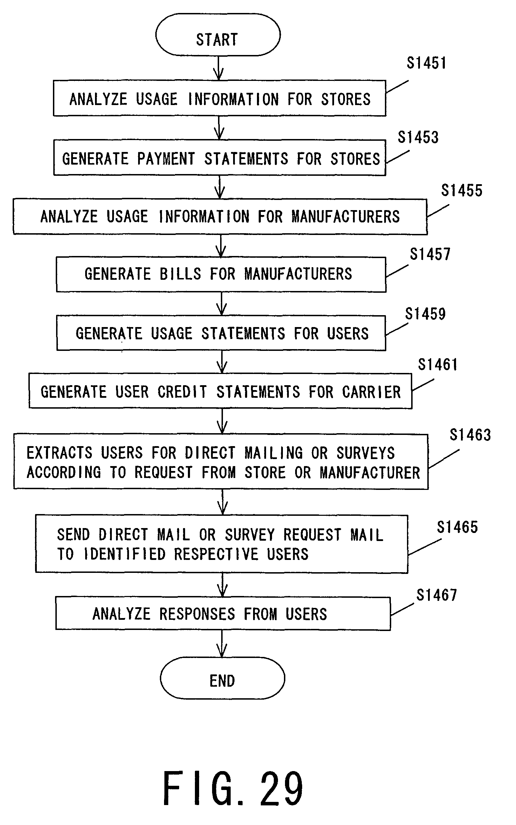

Steps S1019 to S1023 in Fig. 13 are described next with reference to Fig. 29.

The usage information processor 156 analyzes the usage information for stores (step S1451). For example, the usage information database 185 is searched by store code to generate discount statements for each store. Furthermore, because the member ID can be identified from the scanned bar code information of the electronic coupon, the member database 180 is searched using the member ID to tabulate the area codes of coupon users for each store based on the registered member information (attributes). Quantities purchased using the electronic coupon might also be calculated for each product. The results of these analyses can be provided to the stores from a web page accessible only by the stores on the server 150. Results may also be printed to hard copy.

The billing and payment processor 158 also generates payment statements for the stores (step S1453). In this process, the total due for electronic coupons used at the store during a specific period is calculated. Then, a service charge is calculated according to the total discount amount, the service charge is included in the payment statement. These payment statements can also be made available through a special stores-only web page on the server 150.

The usage data processor 156 also analyzes the usage information for the manufacturers (step S1455). This might include tabulating cumulative discounts provided for each product, and cluster analysis (by area, age, sex, for example) of coupon use by store (or chain). The results of these analyses can be provided to the manufacturers from a web page accessible only by manufacturers on the server 150. Results could also be printed to hard copy.

The billing and payment processor 158 also generates bills for the manufacturers (step S1457). To bill the manufacturer for the total discount and service charges, the total discount of the electronic coupons for that manufacturer, which are used by end users, is calculated, and a service charge that is, for example, a certain percentage of the total discount is then added to create the bill. These bills can also be made available through a special web page for the manufacture on the server 150.

The billing and payment processor 158 also generates usage statements for the end users (step S1459). The discount amounts for each sales slip are stored for each member ID in the member database 180, and this information can therefore be made accessible from a special user's-only web page on the server 150. A sample web page is shown in Fig. 30. This sample web page shows information about the actual discount total for the actual purchased quantity for each electronic coupon used, and includes the date the coupon was used, the store where it was used, the bar code information and specified quantity, the total discount for the specified quantity, and the actual purchased quantity (hits). The total quantity and total discount for products purchased with the electronic coupons are also shown. Because this embodiment rebates the discount by issuing a credit against the communication charges for the user's cellular phone, the month in which the credit will be issued (February in this example) is also shown. The billing and payment processor 158 also calculates the total discount amount for a specific period, and also stores this information into the member database 180, for example.

The billing and payment processor 158 also generates payment statements for the telecommunication service provider (step S1461). In this preferred embodiment the monthly communication charges for the user's cellular phone are reduced an amount equal to the total discount due to the user. Therefore, the billing and payment processor 158 searches the member database 180 and generates payment statements for each telecommunication service provider to show the telephone number (subscriber number) and credit due for each user. These statements can be sent to the carrier server 130 from server 150 via network 100. The statements could also be provided on magnetic tape or other computer-readable storage medium. Crediting the user's phone bill is only one way that the discount can be rebated to the user. For example, the total discount due may be paid to the user by check or bank transfer.

The steps shown in Fig. 29 need not be accomplished in the order shown, and can be performed in any desired order. Furthermore, the above steps are normally performed on a regular basis, but the steps described below may be done in response to a request from a store or manufacturer.

In response to a request from a store or manufacturer, the data collection processor 157 extracts the users to whom direct mail or a survey is to be sent according to the conditions specified in the request (step S1463). For example, the usage information database 185 might be searched to find users that purchased particular products or services. Or, the usage information database 185 might be searched to find users that purchased particular products or services and belong to a particular cluster. Further alternatively, the member database 180 might be searched to extract users belonging to a particular cluster. The data collection processor 157 then sends the direct mail or survey request mail to the identified users (step S1465). The e-mail address for the cellular phone standard e-mail address registered in the member database 180 is used for this mailing. It should be noted that it is easier for users to respond if a link to the survey page on the web server 150 is included in the survey request mail, and responses can also then be automatically tabulated. Survey responses from users are also stored in the collected data database 186.

The data collection processor 157 also tabulates and analyzes user responses, and provides the tabulated results to the store or manufacturer requesting the survey on a special web page, for example (step S1467). The tabulation and analysis is conducted according to the instructions from the store or manufacturer if those exist.

It should be noted that the present invention shall not be limited to the second embodiment described above. For example, in Fig. 12, cellular phone 110, user terminal 120, carrier server 130, manufacturer terminal 140, and server 150, for example, is connected to one network 100, but these system components can be connected each other through a variety of dedicated lines, public lines, the Internet, and other communication paths. Furthermore, the server 150 and store system 170 are shown connected via public network 160, but they may also be connected via other network 100 such as the Internet.

Yet further, server 150 and store system 170 can each be one or a plurality of computers. In addition, the functions of server 150 and store system 170 are divided into the blocks shown in Fig. 12 for convenience only, and the actual program or modules may be otherwise structured. Furthermore, the databases can be any desirable means of storing the data, and shall not be limited to the structure shown in Fig. 12.

Yet further, the screen samples shown in Fig. 16, Fig. 18, Fig. 19, Fig. 20, Fig. 21, Fig. 22, and Fig. 30 are shown by way of example only, and the content thereof can be changed as desired. Furthermore, the flow from screen to screen in Fig. 19 to Fig. 21 is shown by way of example only, and can be variously configured to allow product or service selection.

Furthermore, the manufacturers referred to above shall not be limited to manufacturing companies and can be stores. For example, a store can dynamically register information for coupons that are valid only at certain times, such as when customer traffic is slow, in order to increase customer traffic.

The above described electronic coupon system can be implemented with a combination of computers and program providing the described functions. This program can be stored into and distributed on various computer-readable storage media, including floppy disk, CD-ROM, magneto-optical disk, semiconductor memory, hard disk, or other storage medium or storage device. The program can also be distributed over a network. Furthermore, data used in the described processes is stored temporarily in computer memory.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart there from.

## Claims

1. An electronic coupon system for providing an electronic coupon to a user having a mobile communication device with a display device, said electronic coupon system comprising:
an electronic coupon information storage device for storing information relating to said electronic coupon;
a bar code generator for generating bar code information based at least on said information relating to said electronic coupon stored in said electronic coupon information storage device; and
a bar code information transmitter for transmitting to said mobile communication device said bar code information generated by said bar code generator.

2. The electronic coupon system set forth in claim 1, wherein said bar code generator generates said bar code information by using user identification information and said information relating to said electronic coupon stored in said electronic coupon information storage device.

3. The electronic coupon system set forth in claim 1, wherein said bar code generator generates said bar code information by using at least information relating to a combination of products or services for which the electronic coupon is valid.

4. The electronic coupon system set forth in any one of claims 1 to 3, wherein said bar code information generated by said bar code generator includes image data for displaying a bar code on said display device of said mobile communication device.

5. The electronic coupon system set forth in any one of claims 1 to 4, wherein said bar code generator stores into an issued bar code information storage device user identification information, identification information for user-selected products or services for which the electronic coupons are valid, and information relating to at least a combination of user-selected products or services for which the electronic coupons are valid.

6. The electronic coupon system set forth in any one of claims 1 to 5, further comprising electronic coupon information search means for searching information relating to said electronic coupon from said electronic coupon information storage device according to an instruction from a user, and outputting the search result to said mobile communication device of said user.

7. The electronic coupon system set forth in any one of claims 1 to 6, further comprising a receiver for receiving bar code information scanned by a bar code scanner installed in a store and transmitted from a computer for the store,
said bar code information being transmitted from said bar code information transmitter to a user's mobile communication device and displayed on said display device of the user's mobile communication device in the store.

8. The electronic coupon system set forth in any one of claims 1 to 6, further comprising a receiver for receiving bar code information and identification information of a purchased product or service from a computer for a store in which a bar code scanner is installed,
said bar code information being transmitted from said bar code information transmitter to a user's mobile communication device and scanned from said display device thereof by said bar code scanner.

9. The electronic coupon system set forth in any one of claims 1 to 6, further comprising a receiver for receiving bar code information, identification of a purchased product or service and quantity information from a computer for a store in which a bar code scanner is installed, said bar code information being transmitted from the bar code information transmitter to a user's mobile communication device and scanned from said display device thereof by said bar code scanner.

10. The electronic coupon system set forth in any one of claims 1 to 6, further comprising a receiver for receiving bar code information and a request for identification information of products or services for which the electronic coupons are valid and which corresponds to said bar code information received by said receiver from a computer for a store having a bar code scanner, said bar code information being transmitted from the bar code information transmitter to a user's mobile communication device and scanned from said display device thereof by said bar code scanner; and
a sender for sending said identification information of said products or services for which the electronic coupons are valid to said computer for the store in response to said request received from said computer for the store.

11. The electronic coupon system set forth in claim 10, further comprising:
means for receiving from said computer for the store identification information and quantity information for a purchased product or service corresponding to said bar code information; and
means for storing said bar code information and said identification information and quantity information for the purchased product or service corresponding to said bar code information.

12. The electronic coupon system set forth in claim 7, further comprising a bar code comparator for comparing first bar code information received from said receiver and second bar code information generated by said bar code generator.

13. The electronic coupon system set forth in claim 12, wherein if said first bar code information and said second bar code information are the same, said bar code comparator additionally compares time stamp information of said first bar code information with time stamp information of said second bar code information.

14. The electronic coupon system set forth in any one of claims 7 to 11, further comprising:
a user information storage device for storing user identification information and user attribute information; and
a data collector for determining a relationship between said user attribute information and products or services for which the electronic coupons are valid by extracting user identification information and identification information of the products or services for which the electronic coupons are valid by using at least said bar code information received by said receiver, and extracting said user attribute information from said user information storage device by using said user identification information.

15. The electronic coupon system set forth in any one of claims 7 to 11, further comprising a data collector for extracting by using at least said bar code information received by said receiver and storing to a usage information storage device, user identification information and identification information of the products or services for which the electronic coupons are valid, said data collector extracting user identification information of users that have purchased particular products or services based on information stored in said usage information storage device, and sending a survey request and/or a direct mail to the users based on the extracted user identification information.

16. The electronic coupon system set forth in any one of claims 7 to 11, further comprising means for determining whether or not said bar code information received from said computer for the store by said receiver is bar code information issued for that store and/or was scanned before an expiration.

17. The electronic coupon system set forth in claim 7, 11, or 16 further comprising second means for determining whether or not a purchased product or service associated with said bar code information is included in the products or services for which the electronic coupons are valid and which are extracted by using at least said bar code information.

18. The electronic coupon system set forth in claim 17, further comprising means for storing into a storage device a discount amount for a purchased product or service determined by said second means for determining to be included in the products or services for which the electronic coupons are valid and which are extracted by using at least said bar code information.

19. The electronic coupon system set forth in claim 18, further comprising means for reporting the discount amount accumulated during a predetermined period by each user to a telecommunication service provider relating to the user's mobile communication device.

20. The electronic coupon system set forth in any one of claims 7 to 11, further comprising means for determining a discount amount based on identification information of the products or services for which the electronic coupons are valid and which are extracted by using at least said bar code information received by said receiver, and billing a provider of the products or services for which the electronic coupons are valid for an amount at least equal to said discount amount.

21. An electronic coupon providing method for providing an electronic coupon to a user having a mobile communication device with a display device, said electronic coupon providing method comprising the steps of:
storing information relating to said electronic coupon into an electronic coupon information storage device;
generating bar code information based at least on said information relating to said electronic coupon stored in said electronic coupon information storage device; and
transmitting to said mobile communication device said bar code information generated in said step of generating bar code information.

22. The electronic coupon providing method set forth in claim 21, wherein said step of generating bar code information comprises a step of generating said bar code information by using user identification information and said information relating to said electronic coupon stored in said electronic coupon information storage device.

23. The electronic coupon providing method set forth in claim 21, wherein said step of generating bar code information comprises a step of generating said bar code information by using at least information relating to a combination of products or services for which the electronic coupons are valid.

24. The electronic coupon providing method set forth in any one of claims 21 to 23, further comprising a step of receiving bar code information scanned by a bar code scanner installed in a store and transmitted from a computer for the store,
said bar code information being transmitted in said step of transmitting said bar code information to a user's mobile communication device and displayed on said display device of the user's mobile communication device in the store.

25. The electronic coupon providing method set forth in any one of claims 21 to 23, further comprising a step of receiving bar code information and identification information of a purchased product or service from a computer for a store in which a bar code scanner is installed,
said bar code information being transmitted in said step of transmitting said bar code information to a user's mobile communication device and scanned from said display device thereof by said bar code scanner.

26. The electronic coupon providing method set forth in claim 24, further comprising a step of comparing first bar code information received in said receiving step and second bar code information generated in said step of generating bar code information.

27. The electronic coupon providing method set forth in claim 26, wherein said comparing step comprises a step of, if said first bar code information and said second bar code information are the same, comparing time stamp information of said first bar code information with time stamp information of said second bar code information.

28. The electronic coupon providing method set forth in claim 24 or 25, further comprising a step of determining a relationship between user attribute information and products or services for which the electronic coupons are valid by extracting user identification information and identification information of products or services for which the electronic coupons are valid by using at least said bar code information received in said receiving step, and extracting said user attribute information by using said user identification information, from a user information storage device for storing said user identification information and said user attribute information.

29. The electronic coupon providing method set forth in claim 24 or 25, further comprising a first step of extracting by using at least said bar code information received in said receiving step and storing into a usage information storage device, user identification information and identification information of products or services for which the electronic coupons are valid,
wherein said first step comprises a step of extracting said user identification information of users that have purchased particular products or services based on information stored in said usage information storage device, and sending a survey request and/or a direct mail to the users based on the extracted user identification information.

30. The electronic coupon providing method set forth in claim 25, further comprising a step of determining whether or not said bar code information received from said computer for the store in the receiving step is bar code information issued for that store and/or was scanned before an expiration.

31. The electronic coupon providing method set forth in claim 25 or 30, further comprising a second step of determining whether or not a purchased product or service associated with said bar code information is included in the products or services for which the electronic coupons are valid and which are extracted by using at least said bar code information.

32. The electronic coupon providing method set forth in claim 31, further comprising a step of storing into a storage device a discount amount for a purchased product or service determined in said second step of determining to be included in the products or services for which the electronic coupons are valid and which are extracted by using at least said bar code information.

33. The electronic coupon providing method set forth in claim 24 or 25, further comprising a step of determining a discount amount based on identification information of the products or services for which the electronic coupons are valid and which are extracted by using at least said bar code information received in said receiving step, and billing a provider of the products or services for which the electronic coupons are valid for an amount at least equal to said discount amount.

34. A computer program which, when run on a computer, causes the computer to carry out a method as claimed in any one of claims 21 to 33.

35. A computer program which, when run on a computer, causes the computer to become a system as claimed in any one of claims 1 to 20.
